# EUROPÄISCHE PATENTSCHRIFT

(11) **EP 4 223 077 B1**
(45) Veröffentlichungstag und Bekanntmachung des Hinweises auf die Patenterteilung: **25.06.2025**
(21) Anmeldenummer: 21786448.7
(22) Anmeldetag: 01.10.2021
(51) Int. Cl.: H05B 3/00, H05B 3/60, H05B 6/60

(54) **EFFIZIENTE, INDIREKTE ELEKTRISCHE BEHEIZUNG**
EFFICIENT INDIRECT ELECTRICAL HEATING
CHAUFFAGE ÉLECTRIQUE INDIRECT, EFFICACE

(30) Priorität: 02.10.2020 EP 20199923
(43) Veröffentlichungstag der Anmeldung: 09.08.2023
(73) Patentinhaber: BASF SE, 67056 Ludwigshafen am Rhein (DE); Linde GmbH, 82049 Pullach (DE)
(72) Erfinder: KOCHENDOERFER, Kiara Aenne, 67056 Ludwigshafen am Rhein (DE); JENNE, Eric, 67056 Ludwigshafen am Rhein (DE); SHUSTOV, Andrey, 67056 Ludwigshafen am Rhein (DE)
(74) Vertreter: Altmann Stößel Dick Patentanwälte PartG mbB
(86) Internationale Anmeldenummer: PCT/EP2021/077104
(87) Internationale Veröffentlichungsnummer: WO 2022/069711

(56) Entgegenhaltungen:
- CA-A1- 2 613 726
- CA-A1- 2 613 908
- DE-A1- 2 526 196
- FR-A1- 2 370 239
- US-A- 3 855 449
- US-A- 5 247 148
- US-A1- 2019 132 908

## Beschreibung

Die Erfindung betrifft eine Einrichtung umfassend mindestens eine Rohrleitung und ein Verfahren zum Erhitzen eines Einsatzstoffes in einer Rohrleitung.

Derartige Einrichtungen sind grundsätzlich bekannt. Beispielsweise beschreibt WO 2015/197181 A1 eine Einrichtung zum Heizen eines Fluides mit zumindest einer elektrisch leitfähigen Rohrleitung zur Aufnahme des Fluides, und zumindest eine mit der mindestens einen Rohrleitung verbundene Spannungsquelle. Die mindestens eine Spannungsquelle ist dazu ausgebildet, einen elektrischen Wechselstrom in der mindestens einen Rohrleitung zu erzeugen, der die mindestens eine Rohrleitung zum Heizen des Fluides erwärmt.

WO 2020/035575 beschreibt eine Einrichtung zum Erhitzen eines Fluides. Die Einrichtung umfasst -mindestens eine elektrisch leitfähige Rohrleitung und/oder mindestens ein elektrisch leitfähiges Rohrleitungssegment zur Aufnahme des Fluides, und -mindestens eine Gleichstrom- und/oder Gleichspannungsquelle, wobei jeder Rohrleitung und/oder jedem Rohrleitungssegment je eine Gleichstrom-und/oder Gleichspannungsquelle zugeordnet ist, welche mit der jeweiligen Rohrleitung und/oder mit dem jeweiligen Rohrleitungssegment verbunden ist, wobei die jeweilige Gleichstrom-und/oder Gleichspannungsquelle dazu ausgebildet ist, einen elektrischen Strom in der jeweiligen Rohrleitung und/oder in dem jeweiligen Rohrleitungssegment zu erzeugen, welcher die jeweilige Rohrleitung und/oder das jeweilige Rohrleitungssegment durch Joulesche Wärme, welche bei Durchgang des elektrischen Stromes durch leitendes Rohrmaterial entsteht, zum Erhitzen des Fluides erwärmt.

Aus CA 2 613 726 A1 sind bedarfsgesteuerte Wassererhitzer und Verfahren zum Betrieb desselben bekannt. Der Wassererhitzer enthält ein elektrolytisches Heizungssubsystem, welches ein gepulstes Elektrolysesystem ist, das während des Betriebs heiß wird. In der Nähe des Elektrolysebehälters des elektrolytischen Heizungssubsystems befindet sich eine Wärmeaustauschleitung, die in eine Wasserleitung integriert ist. Wenn Wasser durch den bedarfsgesteuerten Warmwasserbereiter fließt, durchläuft das Wasser die Wärmetauscherleitung und wird dadurch erhitzt. Aus CA 2 613 908 A1 ist ein Strahlungsheizungssystem und ein Verfahren zum Betrieb desselben bekannt. Das System verwendet ein elektrolytisches Heizungssubsystem. Das elektrolytische Heizungssubsystem ist ein gepulstes Elektrolysesystem, das während des Betriebs das im Elektrolysebehälter enthaltene Medium erwärmt. Das erwärmte Medium wird durch einen Wärmetauscher zirkuliert, der über eine erste Leitung mit dem Elektrolysebehälter verbunden ist, wodurch der Wärmetauscher beheizt wird. Ein Wärmeträgermedium wird über eine zweite Leitung durch den Strahlungsheizungsschlauch und den Wärmetauscher zirkuliert. Während das Wärmeträgermedium durch den Wärmetauscher zirkuliert, wird es erwärmt, wobei die absorbierte Wärme dann durch den Strahlungswärmerohrschlauch abgestrahlt wird. US 3,855,449 A beschreibt zwei miteinander kommunizierende Kammern, die jeweils eine Menge an flüssigem Elektrolyt und eine Menge an Elektrolyt in Dampfform enthalten. Die dampfhaltigen Teile der Kammern sind miteinander verbunden und die flüssigkeitshaltigen Teile der Kammern sind miteinander verbunden. Eine der Kammern beherbergt Elektroden, die mit einer elektrischen Energiequelle verbunden werden können, um eine Erwärmung der Elektroden und eine Verdampfung des flüssigen Elektrolyten zu bewirken. In der anderen Kammer befindet sich ein Wärmetauscher, der von einem zu erwärmenden Medium durchströmt werden kann. In der Verbindung zwischen den dampfhaltigen Teilen der Kammern ist ein Ventil angeordnet, das auf die Temperatur des zu erwärmenden Mediums anspricht. Wenn eine Erwärmung des Mediums erforderlich ist, öffnet sich das Ventil, so dass verdampfter Elektrolyt aus der Kammer, in der sich die Elektroden befinden, in die andere Kammer fließen und am Wärmetauscher kondensieren kann. Die vom kondensierten Elektrolyt abgegebene Wärme wird auf das Medium übertragen.

Bekannte Einrichtungen zum Erhitzen eines Fluides in einer Rohrleitung sind jedoch oft technisch kompliziert oder nur mit hohen technischen Aufwand zu realisieren.

Es ist daher Aufgabe der vorliegenden Erfindung, eine Einrichtung umfassend mindestens eine Rohrleitung zur Aufnahme mindestens eines Einsatzstoffes und ein Verfahren zum Erhitzen eines Einsatzstoffes bereitzustellen, welche die Nachteile bekannter Vorrichtungen und Verfahren zumindest weitgehend vermeiden. Insbesondere soll die Einrichtung und das Verfahren technisch einfach zu realisieren und durchzuführen sein und auch wirtschaftlich sein. Insbesondere soll die Einrichtung einsetzbar sein und das Verfahren anwendbar sein in einer Anlage, ausgewählt aus der Gruppe bestehend aus: einer Anlage zur Durchführung von mindestens einer endothermen Reaktion, einer Anlage zur Aufwärmung, einer Anlage zur Vorwärmung, einem Steamcracker, einem Steamreformer, einer Vorrichtung zur Alkandehydrierung, einem Reformer, einer Vorrichtung zum Trockenreforming, einer Vorrichtung zur Styrolherstellung, einer Vorrichtung zur Ethylbenzoldehydrierung, einer Vorrichtung zum Spalten von Harnstoffen, Isocyanate, Melamin, einem Cracker, einem katalytischen Cracker, einer Vorrichtung zum Dehydrieren.

Diese Aufgabe wird durch eine Einrichtung, ein Verfahren und eine Anlage mit den Merkmalen der unabhängigen Ansprüche gelöst. Bevorzugte Ausgestaltungen der Erfindung sind u. a. in den zugehörigen Unteransprüchen und Unteranspruchsverknüpfungen angegeben.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben dem durch diese Begriffe eingeführten Merkmal, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe oder ähnliche Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt der vorliegenden Erfindung wird eine Einrichtung umfassend mindestens eine Rohrleitung zur Aufnahme mindestens eines Einsatzstoffes vorgeschlagen.

Unter einem "Einsatzstoff" kann im Rahmen der vorliegenden Erfindung ein grundsätzlich beliebiges Material, auch als Feed oder Feedstock bezeichnet, verstanden werden, aus welchem Reaktionsprodukte erzeugt und/oder hergestellt werden können, insbesondere durch mindestens eine chemische Reaktion. Die Reaktion kann eine endotherme Reaktion sein. Die Reaktion kann eine nicht endotherme Reaktion sein, beispielsweise eine Vorwärmung oder eine Aufwärmung. Der Einsatzstoff kann insbesondere ein Edukt sein, mit welchem eine chemische Reaktion durchgeführt werden soll. Der Einsatzstoff kann flüssig oder gasförmig sein. Der Einsatzstoff kann ein thermisch zu spaltender Kohlenwasserstoff und/oder ein Gemisch sein. Der Einsatzstoff kann mindestens ein Element aufweisen, ausgewählt aus der Gruppe bestehend aus: Methan, Ethan, Propan, Butan, Naphtha, Ethylbenzol, Gasöl, Kondensate, Bioflüssigkeiten, Biogase, Pyrolyseöle, Abfallöle und Flüssigkeiten aus nachwachsenden Rohstoffen. Bioflüssigkeiten können beispielsweise Fette oder Öle oder deren Derivate aus nachwachsenden Rohstoffen sein, beispielsweise Bioöl oder Biodiesel. Auch andere Einsatzstoffe sind denkbar.

Unter einer "Rohrleitung" kann im Rahmen der vorliegenden Erfindung eine beliebige geformte Vorrichtung verstanden werden, welche eingerichtet ist, den Einsatzstoff aufzunehmen und/oder zu transportieren. Die Rohrleitung kann mindestens ein Reaktionsrohr sein und/oder aufweisen, in welchem mindestens eine chemische Reaktion ablaufen kann. Die Rohrleitung kann mindestens ein Rohr und/oder mindestens ein Rohrleitungssegment und/oder mindestens eine Rohrleitungsschlange umfassen. Ein Rohrleitungssegment kann ein Teilbereich einer Rohrleitung sein. Die Ausdrücke "Rohrleitung" und "Rohrleitungssegment" und "Rohrleitungsschlange" werden im Folgenden als Synonyme verwendet. Geometrie und/oder Oberflächen und/oder Material der Rohrleitung können anhängig von einem zu transportierenden Einsatzstoff sein. Geometrie und/oder Oberflächen und/oder Material der Rohrleitung können auch abhängig von einer gewünschten Reaktion und/oder Vermeidung einer bestimmten Reaktion gewählt werden. Beispielsweise können keramische Rohre gewählt werden, um eine Verkokung zu reduzieren.

Die Einrichtung kann eine Mehrzahl an Rohrleitungen aufweisen. Die Einrichtung kann I Rohrleitungen aufweisen, wobei I eine natürliche Zahl größer oder gleich zwei ist. Beispielsweise kann die Einrichtung mindestens zwei, drei, vier, fünf oder auch mehr Rohrleitungen aufweisen. Die Einrichtung kann beispielsweise bis zu hundert Rohrleitungen aufweisen. Die Rohrleitungen können identisch oder verschieden ausgestaltet sein.

Die Rohrleitungen können symmetrische und/oder unsymmetrische Rohre und/oder Kombinationen davon aufweisen. Geometrie und/oder Oberflächen und/oder Material der Rohrleitung kann abhängig von einem zu transportierenden Einsatzstoff oder auch abhängig von einer Optimierung der Reaktion oder anderen Faktoren sein. Bei einer rein symmetrischen Ausgestaltung kann die Einrichtung Rohrleitungen von einem identischen Rohrtyp aufweisen. Unter "unsymmetrische Rohre" und "Kombinationen von symmetrischen und unsymmetrischen Rohren" kann verstanden werden, dass die Einrichtung eine beliebige Kombination von Rohrtypen aufweisen kann, welche beispielsweise zudem beliebig parallel oder in Reihe verschaltet sein können. Unter einem "Rohrtyp" kann eine durch bestimmte Merkmale gekennzeichnete Kategorie oder Art von Rohrleitung verstanden werden. Der Rohrtyp kann mindestens durch ein Merkmal charakterisiert werden, ausgewählt aus der Gruppe bestehend aus: einer horizontalen Ausgestaltung der Rohrleitung; einer vertikalen Ausgestaltung der Rohrleitung; einer Länge im Eintritt (l1) und/oder Austritt (l2) und/oder Übergang (l3); einem Durchmesser im Eintritt (d1) und Austritt (d2) und/oder Übergang (d3); Anzahl n von Pässen; Länge pro Pass; Durchmesser pro Pass; Geometrie; Oberfläche; und Material. Die Einrichtung kann eine Kombination von mindestens zwei verschiedenen Rohrtypen aufweisen, welche parallel und/oder in Reihe verschaltet sind. Beispielsweise kann die Einrichtung Rohrleitungen von unterschiedlichen Längen im Eintritt (l1) und/oder Austritt (l2) und/oder Übergang (l3) aufweisen. Beispielsweise kann die Einrichtung Rohrleitungen mit einer Asymmetrie der Durchmesser im Eintritt (d1) und/oder Austritt (d2) und/oder Übergang (d3) aufweisen. Beispielsweise kann die Einrichtung Rohrleitungen mit einer unterschiedlichen Anzahl von Pässen aufweisen. Beispielsweise kann die Einrichtung Rohrleitungen mit Pässen mit unterschiedlichen Längen pro Pass und/oder unterschiedlichem Durchmesser pro Pass aufweisen. Grundsätzlich sind beliebige Kombinationen parallel und/oder in Reihe von allen Rohrtypen denkbar. Den einzelnen Rohrleitungen können eine oder mehrere Strom- bzw. Spannungsquellen zugeordnet sein. Die Strom- und/oder Spannungszufuhr kann beispielsweise durch Verwendung mindestens eines Reglers jeweils abhängig von der Reaktion und Verfahrenstechnik angepasst werden.

Die Einrichtung kann eine Mehrzahl von Einlässen und/oder Auslässen und/oder Produktionsströmen aufweisen. Die Rohrleitungen von verschiedenem oder identischem Rohrtyp können parallel und/oder in Reihe mit mehreren Einlässen und/oder Auslässen angeordnet sein. Rohrleitungen können in verschiedenen Rohrtypen in Form eines Baukastens vorliegen und abhängig von einem Verwendungszweck ausgewählt und beliebig kombiniert werden. Durch eine Verwendung von Rohrleitungen von verschiedenen Rohrtypen kann eine genauere Temperaturführung, und/oder eine Anpassung der Reaktion bei schwankendem Feed und/oder eine selektive Ausbeute der Reaktion und/oder eine optimierte Verfahrenstechnik ermöglicht werden. Die Rohrleitungen können identische oder verschiedene Geometrien und/oder Oberflächen und/oder Materialien aufweisen.

Die Rohrleitungen können durchverbunden sein und somit ein Rohrsystem zur Aufnahme des Einsatzstoffes bilden. Unter einem "Rohrsystem" kann eine Vorrichtung aus mindestens zwei, insbesondere miteinander verbundenen, Rohrleitungen verstanden werden. Das Rohrsystem kann zu- und abführende Rohrleitungen aufweisen. Das Rohrsystem kann mindestens einen Einlass zur Aufnahme des Einsatzstoffes aufweisen. Das Rohrsystem kann mindestens einen Auslass zur Ausgabe des Einsatzstoffes aufweisen. Unter "durchverbunden" kann verstanden werden, dass die Rohrleitungen miteinander in einer Fluidverbindung stehen. So können die Rohrleitungen derart angeordnet und verbunden sein, dass der Einsatzstoff die Rohrleitungen nacheinander durchströmt. Mehrere oder sämtliche der Rohrleitungen können seriell und/oder parallel konfiguriert sein. Die Rohrleitungen können parallel zu einander verschaltet sein, derart, dass der Einsatzstoff mindestens zwei Rohrleitungen parallel durchströmen kann. Die Rohrleitungen, insbesondere die parallel geschalteten Rohrleitungen, können derart eingerichtet sein, unterschiedliche Einsatzstoffe parallel zu transportieren. Insbesondere können für einen Transport von verschiedenen Einsatzstoffen die parallel geschalteten Rohrleitungen, zueinander verschiedene Geometrien und/oder Oberflächen und/oder Materialien aufweisen. Insbesondere für den Transport eines Einsatzstoffes, können mehrere oder sämtliche der Rohrleitungen parallel konfiguriert sein, so dass der Einsatzstoff auf jene parallel konfigurierten Rohrleitungen aufteilbar ist. Auch Kombinationen von einer seriellen und parallelen Schaltung sind denkbar.

Beispielsweise kann die Rohrleitung mindestens eine elektrisch leitfähige Rohrleitung zur Aufnahme des Einsatzstoffes umfassen. Unter einer "elektrisch leitfähigen Rohrleitung" kann verstanden werden, dass die Rohrleitung, insbesondere das Material der Rohrleitung, eingerichtet ist, elektrischen Strom zu leiten. Auch Ausgestaltungen als elektrisch nichtleitende Rohrleitungen oder schlechtleitende Rohrleitungen sind jedoch denkbar. Die Rohrleitung kann elektrisch leitend oder elektrisch isolierend ausgestaltet sein. Sowohl metallische Rohrleitungen als auch keramische Rohrleitungen sind denkbar.

Die Rohrleitungen und entsprechend zu- und abführenden Rohrleitungen können miteinander fluidleitend verbunden sein. Bei einer Verwendung von elektrisch leitfähigen Rohrleitungen können die zu- und abführenden Rohrleitungen galvanisch voneinander getrennt sein. Unter "galvanisch voneinander getrennt" kann verstanden werden, dass die Rohrleitungen und die zu- und abführenden Rohrleitungen derart voneinander getrennt sind, dass keine elektrische Leitung und/oder eine tolerierbare elektrische Leitung zwischen den Rohrleitungen und den zu- und abführenden Rohrleitungen erfolgt. Die Einrichtung kann mindestens einen Isolator, insbesondere eine Mehrzahl von Isolatoren, aufweisen. Die galvanische Trennung zwischen den jeweiligen Rohrleitungen und den zu- und abführenden Rohrleitungen kann durch die Isolatoren gewährleistet sein. Die Isolatoren können einen freien Durchfluss des Einsatzstoffes sicherstellen.

Die Einrichtung weist mindestens ein stromleitendes Medium auf. Die Einrichtung weist mindestens eine Strom- oder Spannungsquelle auf, welche eingerichtet ist, einen elektrischen Strom in dem stromleitenden Medium zu erzeugen, welcher die Rohrleitung durch Joulesche Wärme, welche bei Durchgang des elektrischen Stromes durch das stromleitenden Medium entsteht, erwärmt.

Unter einem "stromleitenden Medium" kann im Rahmen der vorliegenden Erfindung ein beliebiges Medium verstanden werden, welches stromleitende und/oder magnetische Eigenschaften aufweist. Magnetische Materialien, also stromleitende Medien mit magnetischen Eigenschaften, können sich aufgrund der Auswirkungen hysteresischer Erwärmung schneller als nichtmagnetische erwärmen. Magnetische Materialien können einen natürlichen Widerstand gegen die schnell wechselnden Magnetfelder aufweisen. Magnetisch schlecht leitende Materialien, beispielsweise Aluminium oder Kupfer, können sich wegen ihrer geringen magnetischen Permeabilität schlechter erwärmen lassen. Beispielsweise kann das stromleitende Medium mindestens ein Material mit ferromagnetischen Eigenschaften sein und/oder umfassen, beispielsweise kann die magnetische Permeabilität von etwa 1 bis 1.000.000 H/m sein. Beispielsweise kann das stromleitende Medium Cobalt, Eisen, Nickel, und/oder Ferrite umfassen. Das stromleitende Medium kann einen spezifischen Widerstand aufweisen. Das stromleitende Medium kann ein hochohmsches Medium sein. Das stromleitende Medium kann einen spezifischen Widerstand ρ von 0,1 Ωmm²/m ≤ ρ ≤ 1000 Ωmm²/m aufweisen, bevorzugt von 10 Ωmm²/m ≤ ρ ≤ 1000 Ωmm²/m. Durch Verwendung eines derartigen stromleitenden Mediums kann eine Minimierung der benötigten Strommenge zur Erhitzung des Einsatzstoffes ermöglicht werden. Grundsätzlich ist die Leistung vereinfacht P = U.I =I^{2•}R, mit der Spannung U, dem Strom I und dem Widerstand R. Unter Berücksichtigung von zusätzlichen induktiven Effekten kann die Leistung durch P=((I²*R)²+( I²*2 π*f*L)²)^{0,5} ausgedrückt werden, wobei L die Induktivität, und f die Frequenz ist. Ein breiteres Spektrum von Spannung- und Stromflüssen kann bereitgestellt werden durch eine entsprechende Wahl des spezifischen ohmschen Widerstands des stromleitenden Mediums. Bevorzugt können stromleitende Medien sein, die bei höheren Temperaturen genutzt werden können. Im Gegensatz dazu sind bei Wasser sehr hohe Drücke notwendig, um diese Temperaturen zu erreichen z.B. 300 °C entsprechen 90 bar.

Das stromleitende Medium kann einen beliebigen Aggregatzustand aufweisen. Das stromleitende Medium kann einen festen, flüssigen und/oder gasförmigen Aggregatzustand und Gemische, beispielsweise Emulsionen und Suspensionen aufweisen. Das stromleitende Medium kann ein stromleitendes Granulat oder ein stromleitendes Fluid sein. Das stromleitende Medium kann mindestens ein Material aufweisen, ausgewählt aus der Gruppe bestehend aus: Kohlenstoff, Karbide, Silizide, elektrisch leitfähige Öle, Salzschmelzen, anorganische Salze sowie festflüssige Gemische.

Die Strom- und/oder Spannungsquelle kann eine einphasige oder mehrphasige Wechselstrom- und/oder einphasige oder mehrphasige Wechselspannungsquelle oder eine Gleichstrom- und/oder Gleichspannungsquelle umfassen. Die Einrichtung kann mindestens eine Zu- und Ableitung aufweisen, welcher die Strom- und/oder Spannungsquelle mit dem stromleitenden Medium elektrisch verbindet.

Die Einrichtung kann beispielsweise mindestens eine Wechselstrom- und/oder mindestens eine Wechselspannungsquelle aufweisen. Die Wechselstrom- und/oder eine Wechselspannungsquelle kann einphasig oder mehrphasig sein. Unter einer "Wechselstromquelle" kann eine Stromquelle verstanden werden, welche eingerichtet ist, einen Wechselstrom bereitzustellen. Unter einer "Wechselstrom" kann ein elektrischer Strom verstanden werden, dessen Polung sich in zeitlich regelmäßiger Wiederholung ändert. Beispielsweise kann der Wechselstrom ein sinusförmiger Wechselstrom sein. Unter einer "einphasigen" Wechselstromquelle kann eine Wechselstromquelle verstanden werden, welche einen elektrischen Strom mit einer einzigen Phase bereitstellt. Unter einer "mehrphasigen" Wechselstromquelle kann eine Wechselstromquelle verstanden werden, welche einen elektrischen Strom mit mehr als einer Phase bereitstellt. Unter einer "Wechselspannungsquelle" kann eine Spannungsquelle verstanden werden, welche eingerichtet ist, eine Wechselspannung bereitzustellen. Unter einer "Wechselspannung" kann eine Spannung verstanden werden, deren Höhe und Polarität sich zeitlich regelmäßig wiederholt. Beispielsweise kann die Wechselspannung eine sinusförmige Wechselspannung sein. Die von der Wechselspannungsquelle erzeugte Spannung bewirkt einen Stromfluss, insbesondere ein Fließen eines Wechselstroms. Unter einer "einphasigen" Wechselspannungsquelle kann eine Wechselspannungsquelle verstanden werden, welche den Wechselstrom mit einer einzigen Phase bereitstellt. Unter einer "mehrphasigen" Wechselspannungsquelle kann eine Wechselspannungsquelle verstanden werden, welche den Wechselstrom mit mehr als einer Phase bereitstellt.

Die Einrichtung kann mindestens eine Gleichstrom- und/oder mindestens eine Gleichspannungsquelle aufweisen. Unter einer "Gleichstromquelle" kann eine Vorrichtung verstanden werden, welche eingerichtet ist, einen Gleichstrom bereitzustellen. Unter einer "Gleichspannungsquelle" kann eine Vorrichtung verstanden werden, welche eingerichtet ist, eine Gleichspannung bereitzustellen. Die Gleichstromquelle und/oder die Gleichspannungsquelle können eingerichtet sein, einen Gleichstrom in dem stromleitenden Medium zu erzeugen. Unter "Gleichstrom" kann ein in Stärke und Richtung im Wesentlichen konstanter elektrischer Strom verstanden werden. Unter einer "Gleichspannung" kann eine im Wesentlichen konstante elektrische Spannung verstanden werden. Unter "im Wesentlichen konstant" kann ein Strom oder eine Spannung verstanden werden, welcher dessen Schwankungen für die beabsichtigte Wirkung unwesentlich ist.

Die Einrichtung kann eine Mehrzahl von Strom- und/oder Spannungsquellen aufweisen, wobei die Strom- und/oder Spannungsquellen ausgewählt sind aus der Gruppe bestehend aus: einphasigen oder mehrphasigen Wechselstrom- und/oder einphasigen oder mehrphasigen Wechselspannungsquellen oder Gleichstrom- und/oder Gleichspannungsquellen, und einer Kombination davon. Die Einrichtung kann 2 bis M verschiedene Strom- und/oder Spannungsquellen aufweisen, wobei M eine natürliche Zahl größer oder gleich drei ist. Die Strom- und/oder Spannungsquellen können mit oder ohne Regelungsmöglichkeit mindestens einer elektrischen Ausgangsgröße ausgestaltet sein. Die Strom- und/oder Spannungsquellen können unabhängig voneinander elektrisch regelbar sein. Die Strom- und/oder Spannungsquellen können identisch oder verschieden ausgestaltet sein. Beispielsweise kann die Einrichtung derart eingerichtet sein, dass Strom und/oder Spannung für verschiedene Zonen der Einrichtung einstellbar sind. Die Einrichtung kann eine Mehrzahl von Rohrleitungen aufweisen, wobei die Rohrleitungen zu verschiedenen Temperaturbereichen oder Zonen gehören. Die Rohrleitung selbst können ebenfalls Temperaturzonen aufweisen. Durch Verwenden einer Mehrzahl von Strom- und/oder Spannungsquellen kann für verschiedene Zonen insbesondere die Spannung variiert werden. So kann erreicht werden, dass der Strom nicht zu hoch wird, was in zu heißen Rohrleitungen resultieren würde oder umgekehrt zu kalten Rohrleitungen.

Die Einrichtung kann eine Mehrzahl von einphasigen oder mehrphasigen Wechselstrom- oder Wechselspannungsquellen aufweisen. Den Rohrleitungen kann jeweils ein stromleitendes Medium mit einer Wechselstrom- und/oder Wechselspannungsquelle zugeordnet sein, welche mit dem stromleitenden Medium verbunden ist, insbesondere elektrisch über mindestens eine elektrische Verbindung. Weiter sind Ausführungsformen denkbar, in welchen sich mindestens zwei Rohrleitungen ein stromleitendes Medium und eine Wechselstrom- und/oder Wechselspannungsquelle teilen. Zur Verbindung der Wechselstrom- oder Wechselspannungsquelle und den stromleitenden Medien kann der elektrisch beheizbare Reaktor 2 bis N Zu- und Ableitungen aufweisen, wobei N eine natürliche Zahl größer oder gleich drei ist. Die jeweilige Wechselstrom- und/oder Wechselspannungsquelle kann dazu eingerichtet sein, einen elektrischen Strom in dem jeweiligen stromleitenden Medium zu erzeugen. Die Wechselstrom- und/oder Wechselspannungsquellen können entweder geregelt oder ungeregelt sein. Die Wechselstrom- und/oder Wechselspannungsquellen können mit oder ohne Regelungsmöglichkeit mindestens einer elektrischen Ausgangsgröße ausgestaltet sein. Unter einer "Ausgangsgröße" kann ein Strom- und/oder ein Spannungswert und/oder ein Strom- und/oder ein Spannungssignal verstanden werden. Die Einrichtung kann 2 bis M verschiedene Wechselstrom- und/oder Wechselspannungsquellen aufweisen, wobei M eine natürliche Zahl größer oder gleich drei ist. Die Wechselstrom- und/oder Wechselspannungsquellen können unabhängig voneinander elektrisch regelbar sein. So kann beispielsweise ein verschiedener Strom in dem jeweiligen stromleitenden Medium erzeugt und verschiedene Temperaturen in den Rohrleitungen erreicht werden.

Die Einrichtung kann eine Mehrzahl von Gleichstrom- und/oder Gleichspannungsquellen aufweisen. Jeder Rohrleitung kann ein stromleitendes Medium und eine Gleichstrom- und/oder Gleichspannungsquelle zugeordnet sein, welche mit dem stromleitenden Medium verbunden ist, insbesondere elektrisch über mindestens eine elektrische Verbindung. Zur Verbindung der Gleichstrom- und/oder Gleichspannungsquellen und dem stromleitenden Medium kann die Einrichtung 2 bis N positive Pole und/oder Leiter und 2 bis N negative Pole und/oder Leiter aufweisen, wobei N eine natürliche Zahl größer oder gleich drei ist. Die jeweilige Gleichstrom- und/oder Gleichspannungsquellen kann dazu eingerichtet sein, einen elektrischen Strom in dem jeweiligen stromleitenden Medium zu erzeugen. Der erzeugte Strom kann die jeweilige Rohrleitung durch Joulesche Wärme, die bei Durchgang des elektrischen Stromes durch das stromleitende Medium entsteht, zum Erhitzen des Einsatzstoffes erwärmen.

Der erzeugte Strom in dem stromleitenden Medium kann die jeweilige Rohrleitung durch Joulesche Wärme, die bei Durchgang des elektrischen Stromes durch das stromleitende Medium entsteht, zum Erhitzen des Einsatzstoffes erwärmen. Unter "Erwärmen der Rohrleitung" kann ein Vorgang verstanden werden, welcher zu einer Änderung einer Temperatur der Rohrleitung führt, insbesondere einen Anstieg der Temperatur der Rohrleitung. Die Temperatur der Rohrleitung kann konstant bleiben, beispielsweise, wenn die in der Rohrleitung stattfindende Reaktion gleich viel Wärme aufnimmt wie sie bekommt.

Die Einrichtung kann eingerichtet sein, den Einsatzstoff auf eine Temperatur im Bereich von 200 °C bis 1700 °C, bevorzugt von 300 °C bis 1400 °C, besonders bevorzugt von 400 °C bis 875 °C, zu erhitzen. Die Rohrleitung kann eingerichtet sein, die von dem stromleitenden Medium erzeugte Joulesche Wärme zumindest teilweise aufzunehmen und an den Einsatzstoff zumindest teilweise abzugeben. In der Rohrleitung kann mindestens eine endotherme Reaktion erfolgen. Unter einer "endothermen Reaktion" kann eine Reaktion verstanden werden, bei welcher Energie, insbesondere in Form von Wärme, aus der Umgebung aufgenommen wird. Die endotherme Reaktion kann ein Aufwärmen und/oder ein Vorwärmen des Einsatzstoffes umfassen.

Unter "Erhitzen" des Einsatzstoffes kann ein Vorgang verstanden werden, welcher zu einer Änderung einer Temperatur des Einsatzstoffes führt, insbesondere zu einem Anstieg der Temperatur des Einsatzstoffes, beispielsweise zu einem Erwärmen des Einsatzstoffes. Der Einsatzstoff kann beispielsweise durch das Erhitzen bis zu einem vorgegebenen oder vorbestimmten Temperaturwert erwärmt werden.

Die Einrichtung kann Teil einer Anlage sein. Beispielsweise kann die Anlage ausgewählt sein aus der Gruppe bestehend aus: einer Anlage zur Durchführung von mindestens einer endothermen Reaktion, einer Anlage zur Aufwärmung, einer Anlage zur Vorwärmung, einem Steamcracker, einem Steamreformer, einer Vorrichtung zur Alkandehydrierung, einem Reformer, einer Vorrichtung zum Trockenreforming, einer Vorrichtung zur Styrolherstellung, einer Vorrichtung zur Ethylbenzoldehydrierung, einer Vorrichtung zum Spalten von Harnstoffen, Isocyanate, Melamin, einem Cracker, einem katalytischen Cracker, einer Vorrichtung zum Dehydrieren.

Die Einrichtung kann beispielsweise Teil eines Steamcrackers sein. Unter "Steamcracking" kann ein Verfahren verstanden werden, bei welchem durch thermisches Cracken längerkettige Kohlenwasserstoffe, beispielsweise Naphtha, Propan, Butan und Ethan sowie Gasöl und Hydrowax, in Gegenwart von Wasserdampf in kurzkettige Kohlenwasserstoffe umgewandelt werden. Bei dem Steamcracking kann Wasserstoff, Methan, Ethen und Propen als Hauptprodukt, sowie u.a. Butene und Pyrolysebenzin erzeugt werden. Der Steamcracker kann eingerichtet sein, das Fluid auf eine Temperatur im Bereich von 550°C bis 1100°C zu erwärmen.

Beispielsweise kann die Einrichtung Teil eines Reformerofens sein. Unter "Steamreforming" kann ein Verfahren zur Herstellung von Wasserstoff und Kohlenoxiden aus Wasser und kohlenstoffhaltigen Energieträgern, insbesondere Kohlenwasserstoffen wie Erdgas, Leichtbenzin, Methanol, Biogas oder Biomasse verstanden werden. Beispielsweise kann das Fluid auf eine Temperatur im Bereich von 200 °C bis 875 °C, bevorzugt von 400 °C bis 700 °C, erwärmt werden.

Beispielsweise kann die Einrichtung Teil einer Vorrichtung zur Alkandehydrierung sein. Unter einer "Alkandehydrierung" kann ein Verfahren zur Herstellung von Alkenen durch Dehydrierung von Alkanen, beispielsweise Dehydrierung von Butan zu Butenen (BDH) oder Dehydrierung von Propan zu Propen (PDH), verstanden werden. Die Vorrichtung zur Alkandehydrierung kann eingerichtet sein, das Fluid auf eine Temperatur im Bereich von 400°C bis 700°C zu erwärmen.

Auch andere Temperaturen und Temperaturbereiche sind jedoch denkbar.

Das stromleitende Medium kann in einem beliebigen Behälter, beispielsweise einem Rohr oder einem Zylinder, angeordnet sein. Das stromleitende Medium kann direkt oder indirekt durch Aufheizen des Behälters elektrisch beheizt werden.

Das stromleitende Medium und die Rohrleitung können derart zueinander angeordnet sein, dass das stromleitende Medium die Rohrleitung zumindest teilweise umgibt und/oder dass die Rohrleitung das stromleitende Medium zumindest teilweise umgibt. Unter "zumindest teilweise umgeben" können Ausführungsformen verstanden werden, in welchen das stromleitende Medium die Rohrleitung oder die Rohrleitung das stromleitende Medium vollständig umgibt und Ausführungsformen, in welchen nur Teilbereiche der Rohrleitung von dem stromleitenden Medium oder Teilbereich der Rohrleitung das stromleitende Medium umgeben werden. Beispielsweise kann die Rohrleitung als Innenzlinder in einem Hohlzylinder angeordnet sein und von einem Außengranulat umgeben sein. Beispielsweise kann das stromleitende Medium, beispielsweise als Granulat, in einem Rohr innerhalb der Rohrleitung angeordnet sein. Beispielsweise können eine Vielzahl von Rohren gefüllt mit dem stromleitenden Medium innerhalb der Rohrleitung angeordnet sein. Beispielsweise können mehrere Rohrleitungen mit dem Einsatzstoff vorgesehen sein, welche von einem Zylinder mit stromleitendem Medium umgeben sind. Beispielsweise können mehrere Zylinder mit stromleitendem Medium schellenförmig um die Rohrleitung mit dem Einsatzstoff angeordnet sein. Beispielsweise kann die Rohrleitung spiralförmig sein und um die Rohrleitung herum kann ein Zylinder mit dem stromleitenden Medium angeordnet sein, beispielsweise ein Granulat. Beispielswiese kann ein spiralförmiges Rohr mit stromleitendem Medium vorgesehen sein, welches von der Rohrleitung mit dem Einsatzstoff umgeben wird. Beispielsweise können mehrfache spiralförmige Elemente in der Rohrleitung oder in dem stromleitenden Medium vorgesehen sein. Auch sind Ausführungsformen denkbar, in welcher das stromleitende Medium in einer Mehrzahl von Hohlzylindern um verschiedene Bereiche einer Rohrleitung angeordnet sind und eine individuelle Beheizung der Bereiche der Rohrleitung ermöglicht.

Durch indirekte Beheizung der Rohrleitung kann ein vereinfachtes Konzept der Stromzufuhr ermöglicht werden. Es können bei der direkten Beheizung auftretende Probleme wie sehr heiße Pins und Litze und ein hoher Stromfluss vermieden werden. Durch Optimierung des ohmschen Widerstands des stromleitenden Mediums kann der Strom minimiert werden, so dass nur ein kleinerer Strombedarf im Vergleich zu einer direkt beheizten Rohrleitung benötigt wird und entsprechend Transformatoren mit geringerer Leistung möglich sind. Weiter kann eine Sicherheit einfacher zu realisieren sein, da die Rohrleitung nicht selbst unter Spannung steht. Die induktiven Widerstände (Reaktanzen), die im Falle direkter Beheizung entstehen können und zu unerwünschten Effekten führen können, beispielsweise unkontrollierte unsymmetrische Verteilung der elektrischen Ströme in der beheizten Rohrleitung, können durch die Verwendung der indirekten Beheizung minimiert oder vermieden werden. Ein Upscaling kann viel einfacher möglich sein, da die Rohrleitung von der Stromzufuhr abgekoppelt ist. Außerdem kann jede Stromart, z.B. Gleichstrom, 3-phasiger Wechselstrom usw., für dieses Konzept angewendet und sogar für einen Prozess kombiniert genutzt werden. Viele Kombinationen von Rohrtypen sind möglich, so dass ein flexibles Reaktordesign möglich ist. Ein unabhängiges Feedstock-Konzept ist möglich wie Singlefeed, Co-Crack, oder Splitcrack.

Die Einrichtung kann mindestens eine Spule zwecks induktiver Erwärmung aufweisen.

Die Strom- oder Spannungsquelle kann mit dieser Spule verbunden sein, welche eingerichtet ist, die Spule mit einer Spannung oder einem Strom zu beaufschlagen. Das stromleitende Medium und die Spule können derart angeordnet sein, dass das elektromagnetische Feld der Spule einen elektrischen Strom in dem stromleitenden Medium induziert, welcher das stromleitende Medium durch Joulesche Wärme, welche bei Durchgang des elektrischen Stromes durch das stromleitende Medium entsteht, zum Erhitzen des Einsatzstoffes erwärmt.

Die Einrichtung kann mindestens eine weitere Spannungsquelle oder Stromquelle aufweisen, welche mit der Spule verbunden ist und eingerichtet ist, die Spule mit einer Spannung oder einem Strom zu beaufschlagen. Die Spule kann eingerichtet sein, durch die Beaufschlagung mindestens ein elektromagnetisches Feld zu erzeugen. Beispielsweise kann die Rohrleitung sowohl elektrisch als auch magnetisch leitend ausgestaltet sein und die Spule kann derart angeordnet sein, dass das elektromagnetische Feld der Spule einen elektrischen Strom in der Rohrleitung induziert, welcher die Rohrleitung durch Joulesche Wärme, welche bei Durchgang des elektrischen Stromes durch leitendes Rohrmaterial entsteht, zum Erhitzen des Einsatzstoffes erwärmt.

Die Spulengeometrie kann beliebig ausgestaltet sein. Beispielsweise kann die Spule Vertikal, Horizontal, Zylinderförmig oder auch anders ausgestaltet sein.

In dem Reaktionsraum können mehrere induktive Beheizungen vorgesehen sein, welche beispielsweise parallel, seriell oder anders angeordnet sein können.

Hinsichtlich der Ausgestaltung der Einrichtung, insbesondere der Rohrleitung, des stromleitenden Mediums und des Einsatzstoffes wird auf die Beschreibung der Einrichtung weiter oben verwiesen.

In einem weiteren Aspekt wird im Rahmen der vorliegenden Erfindung eine Anlage umfassend eine erfindungsgemäße Einrichtung vorgeschlagen. Hinsichtlich der Ausgestaltung der Anlage wird auf die Beschreibung der Einrichtungen weiter oben oder unten verwiesen.

Die Anlage kann ausgewählt sein aus der Gruppe bestehend aus: einer Anlage zur Durchführung von mindestens einer endothermen Reaktion, einer Anlage zur Aufwärmung, einer Anlage zur Vorwärmung, einem Steamcracker, einem Steamreformer, einer Vorrichtung zur Alkandehydrierung, einem Reformer, einer Vorrichtung zum Trockenreforming, einer Vorrichtung zur Styrolherstellung, einer Vorrichtung zur Ethylbenzoldehydrierung, einer Vorrichtung zum Spalten von Harnstoffen, Isocyanate, Melamin, einem Cracker, einem katalytischen Cracker, einer Vorrichtung zum Dehydrieren.

In einem weiteren Aspekt wird im Rahmen der vorliegenden Erfindung ein Verfahren zum Erhitzen eines Einsatzstoffes vorgeschlagen. In dem Verfahren wird eine erfindungsgemäße Einrichtung verwendet.

Das Verfahren umfasst die folgenden Schritte:
- Bereitstellen mindestens einer Rohrleitung zur Aufnahme des Einsatzstoffes und Aufnahme des Einsatzstoffes in die Rohrleitung;
- Bereitstellen mindestens einer Strom- und/oder mindestens einer Spannungsquelle,
- Erzeugen eines elektrischen Stroms in einem stromleitenden Medium der Einrichtung, welcher die Rohrleitung durch Joulesche Wärme, welche bei Durchgang des elektrischen Stromes durch das stromleitende Medium entsteht, zum Erhitzen des Einsatzstoffes erwärmt.

Hinschlich Ausführungsformen und Definitionen kann auf obige Beschreibung der Einrichtung verwiesen werden. Die Verfahrensschritte können in der angegebenen Reihenfolge durchgeführt werden, wobei einer oder mehrere der Schritte zumindest teilweise auch gleichzeitig durchgeführt werden können und wobei einer oder mehrere der Schritte mehrfach wiederholt werden können. Darüber hinaus können weitere Schritte unabhängig davon, ob sie in der vorliegenden Beschreibung erwähnt werden oder nicht, zusätzlich ausgeführt werden.

Zusätzlich werden folgende Beispiele vorgebracht:
Es wird eine Einrichtung umfassend mindestens eine Rohrleitung zur Aufnahme mindestens eines Einsatzstoffes vorgeschlagen, wobei die Einrichtung mindestens ein stromleitendes Medium aufweist, wobei die Einrichtung mindestens eine Strom- oder Spannungsquelle aufweist, welche eingerichtet ist, einen elektrischen Strom in dem stromleitenden Medium zu erzeugen, welcher die Rohrleitung durch Joulesche Wärme, welche bei Durchgang des elektrischen Stromes durch das stromleitende Medium entsteht, erwärmt.

In einer Ausführungsform ist die Einrichtung eingerichtet, den Einsatzstoff auf eine Temperatur im Bereich von 200 °C bis 1700 °C, bevorzugt 300 °C bis 1400 °C, besonders bevorzugt 400 °C bis 875 °C, zu erhitzen.

In einer Ausführungsform, sind das stromleitende Medium und die Rohrleitung derart zueinander angeordnet, dass das stromleitende Medium die Rohrleitung zumindest teilweise umgibt und/oder dass die Rohrleitung das stromleitende Medium zumindest teilweise umgibt.

In einer Ausführungsform weist das stromleitende Medium einen festen, flüssigen und/oder gasförmigen Aggregatzustand und Gemische auf, ausgewählt aus der Gruppe bestehend aus fest, flüssig und gasförmig.

In einer Ausführungsform ist das stromleitende Medium ein stromleitendes Granulat oder ein stromleitendes Fluid.

In einer Ausführungsform weist das stromleitende Medium mindestens ein Material auf, ausgewählt aus der Gruppe bestehend aus: Kohlenstoff, Karbide, Silizide, elektrisch leitfähige Öle, Salzschmelzen, anorganische Salze sowie festflüssige Gemische.

In einer Ausführungsform erfolgt in der Rohrleitung mindestens eine endotherme Reaktion, wobei die endotherme Reaktion ein Aufwärmen und/oder ein Vorwärmen des Einsatzstoffes umfasst.

In einer Ausführungsform weist das stromleitende Medium einen spezifischen Widerstand ρ von 0,1 Ωmm²/m ≤ ρ ≤ 1000 Ωmm²/m auf, bevorzugt von 10 Ωmm²/m ≤ ρ ≤ 1000 Ωmm²/m.

In einer Ausführungsform umfasst die Strom- und/oder Spannungsquelle eine einphasige oder mehrphasige Wechselstrom- und/oder einphasige oder mehrphasige Wechselspannungsquelle oder eine Gleichstrom- und/oder Gleichspannungsquelle.

In einer Ausführungsform weist die Einrichtung eine Mehrzahl von Strom- und/oder Spannungsquellen auf, wobei die Strom- und/oder Spannungsquellen ausgewählt sind aus der Gruppe bestehend aus: einphasigen oder mehrphasigen Wechselstrom- und/oder einphasigen oder mehrphasigen Wechselspannungsquellen oder Gleichstrom- und/oder Gleichspannungsquellen, und einer Kombination davon.

In einer Ausführungsform sind die Strom- und/oder Spannungsquellen mit oder ohne Regelungsmöglichkeit mindestens einer elektrischen Ausgangsgröße ausgestaltet.

In einer Ausführungsformsind die Strom- und/oder Spannungsquellen unabhängig voneinander elektrisch regelbar.

In einer Ausführungsform sind die Strom- und/oder Spannungsquellen identisch oder verschieden ausgestaltet.

In einer Ausführungsform sind Strom und/oder Spannung für verschiedene Zonen der Einrichtung einstellbar.

In einer Ausführungsform weist die Einrichtung 2 bis M verschiedene Strom- und/oder Spannungsquellen auf, wobei M eine natürliche Zahl größer oder gleich drei ist.

In einer Ausführungsform weist die Einrichtung mindestens eine Zu- und Ableitung auf, welche die Strom- und/oder Spannungsquelle mit dem stromleitenden Medium elektrisch verbindet.

In einer Ausführungsform ist die Rohrleitung elektrisch leitend oder elektrisch isolierend ausgestaltet.

In einer Ausführungsform weist die Einrichtung eine Mehrzahl von Rohrleitungen auf, wobei die Rohrleitungen durchverbunden sind und somit ein Rohrsystem zur Aufnahme des Einsatzstoffes bilden.

In einer Ausführungsform weist die Einrichtung I Rohrleitungen auf, wobei I eine natürliche Zahl größer oder gleich zwei ist, wobei die Rohrleitungen symmetrische oder unsymmetrische Rohre und/oder eine Kombination davon aufweisen.

In einer Ausführungsform sind die Rohrleitungen unterschiedlich hinsichtlich Durchmesser, und/oder Länge, und/oder Geometrie ausgestaltet.

In einer Ausführungsform sind die Rohrleitungen und entsprechend zu- und abführenden Rohrleitungen miteinander fluidleitend verbunden, wobei die Rohrleitungen metallische Rohrleitungen sind, wobei die Rohrleitungen und die zu- und abführenden Rohrleitungen galvanisch voneinander getrennt sind, wobei die Einrichtung Isolatoren aufweist, welche eingerichtet sind zur galvanischen Trennung zwischen den jeweiligen Rohrleitungen und den zu- und abführenden Rohrleitungen, wobei die Isolatoren eingerichtet sind, um einen freien Durchfluss des Einsatzstoffes sicherzustellen.

In einer Ausführungsform sind mehrere oder sämtliche der Rohrleitungen seriell und/oder parallel konfiguriert.

In einer Ausführungsform ist der Einsatzstoff ein thermisch zu spaltender Kohlenwasserstoff und/oder ein Gemisch.

In einer Ausführungsform weist die Einrichtung mindestens eine Spule zwecks induktiver Erwärmung auf, wobei die Strom- oder Spannungsquelle mit der Spule verbunden ist und eingerichtet ist, die Spule mit einer Spannung oder einem Strom zu beaufschlagen, wobei das stromleitende Medium und die Spule derart angeordnet sind, dass das elektromagnetische Feld der Spule einen elektrischen Strom in dem stromleitenden Medium induziert, welcher das stromleitende Medium durch Joulesche Wärme, welche bei Durchgang des elektrischen Stromes durch das stromleitende Medium entsteht, zum Erhitzen des Einsatzstoffes erwärmt.

In einer Ausführungsform weist die Einrichtung mindestens eine Spule zwecks induktiver Erwärmung auf, wobei die Einrichtung mindestens eine weitere Spannungsquelle oder Stromquelle aufweist, welche mit der Spule verbunden ist und eingerichtet ist, die Spule mit einer Spannung oder einem Strom zu beaufschlagen, wobei die Spule eingerichtet ist durch die Beaufschlagung mindestens ein elektromagnetisches Feld zu erzeugen, wobei die Rohrleitung und die Spule derart angeordnet sind, dass das elektromagnetische Feld der Spule einen elektrischen Strom in der Rohrleitung induziert, welcher die Rohrleitung durch Joulesche Wärme, welche bei Durchgang des elektrischen Stromes durch leitendes Rohrmaterial entsteht, zum Erhitzen des Einsatzstoffes erwärmt.

Es wird eine Anlage umfassend mindestens eine Einrichtung gemäß der vorliegenden Erfindung vorgeschlagen.

In einer Ausführungsform ist die Anlage ausgewählt aus der Gruppe bestehend aus: einer Anlage zur Durchführung von mindestens einer endothermen Reaktion, einer Anlage zur Aufwärmung, einer Anlage zur Vorwärmung, einem Steamcracker, einem Steamreformer, einer Vorrichtung zur Alkandehydrierung, einem Reformer, einer Vorrichtung zum Trockenreforming, einer Vorrichtung zur Styrolherstellung, einer Vorrichtung zur Ethylbenzoldehydrierung, einer Vorrichtung zum Spalten von Harnstoffen, Isocyanate, Melamin, einem Cracker, einem katalytischen Cracker, einer Vorrichtung zum Dehydrieren.

Es wird ein Verfahren zum Erhitzen mindestens eines Einsatzstoffes unter Verwendung einer Einrichtung gemäß der vorliegenden Erfindung vorgeschlagen, wobei das Verfahren die folgenden Schritte umfasst:
- Bereitstellen mindestens einer Rohrleitung zur Aufnahme des Einsatzstoffes und Aufnahme des Einsatzstoffes in die Rohrleitung;
- Bereitstellen mindestens einer Strom- und/oder mindestens einer Spannungsquelle,
- Erzeugen eines elektrischen Stroms in einem stromleitenden Medium der Einrichtung, welcher die Rohrleitung durch Joulesche Wärme, welche bei Durchgang des elektrischen Stromes durch das stromleitende Medium entsteht, zum Erhitzen des Einsatzstoffes erwärmt.

### Kurze Beschreibung der Figuren

Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figuren 1a bis 1c: schematische Darstellungen von Ausführungsbeispielen einer erfindungsgemäßen Einrichtung;
- Figur 2: eine schematische Darstellung eines weiteren Ausführungsbeispiels der erfindungsgemäßen Einrichtung;
- Figuren 3a1, 3a2, 3b1 und 3b2: schematische Darstellungen weiterer Ausführungsbeispiele der erfindungsgemäßen Einrichtung;
- Figur 4: eine schematische Darstellung eines Ausführungsbeispiels der erfindungsgemäßen Einrichtung;
- Figuren 5a bis 5d: schematische Darstellungen von weiteren Ausführungsbeispielen der erfindungsgemäßen Einrichtung;
- Figuren 6Ai und 6Cvi: schematische Darstellungen weiterer Ausführungsbeispiele der erfindungsgemäßen Einrichtung;
- Figuren 7a bis 7y: einen Baukasten mit Rohrtypen und erfindungsgemäße Ausführungsbeispiele von Kombinationen von Rohrleitungen und/oder Rohrleitungssegmenten;
- Figuren 8a bis 8g: schematische Darstellungen weiterer Ausführungsbeispiele der erfindungsgemäßen Einrichtung;
- Figuren 9a bis 9g: schematische Darstellungen weiterer Ausführungsbeispiele der erfindungsgemäßen Einrichtung; und
- Figur 10: eine schematische Darstellung eines weiteren Ausführungsbeispiels der erfindungsgemäßen Einrichtung.

### Ausführungsbeispiele

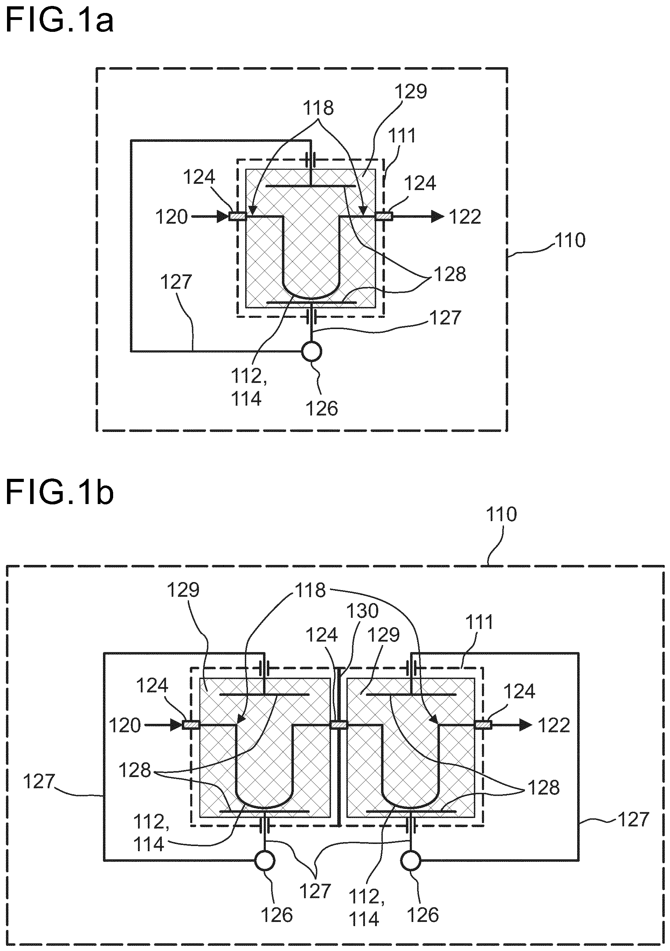

Figuren 1a bis 1c zeigen jeweils eine schematische Darstellung eines Ausführungsbeispiels einer erfindungsgemäßen Einrichtung 110 umfassend mindestens eine Rohrleitung 112 zur Aufnahme mindestens eines Einsatzstoffes. Die Einrichtung 110 kann mindestens einen Reaktivraum 111 aufweisen.

Der Einsatzstoff, auch als Feed oder Feedstock bezeichnet, kann ein beliebiges Material sein, aus welchem Reaktionsprodukte erzeugt und/oder hergestellt werden können, insbesondere durch mindestens eine chemische Reaktion. Der Einsatzstoff kann insbesondere ein Edukt sein, mit welchem eine chemische Reaktion durchgeführt werden soll. Der Einsatzstoff kann flüssig oder gasförmig sein. Der Einsatzstoff kann ein thermisch zu spaltender Kohlenwasserstoff und/oder ein Gemisch sein. Der Einsatzstoff kann mindestens ein Element aufweisen, ausgewählt aus der Gruppe bestehend aus: Methan, Ethan, Propan, Butan, Naphtha, Ethylbenzol, Gasöl, Kondensate, Bioflüssigkeiten, Biogase, Pyrolyseöle, Abfallöle und Flüssigkeiten aus nachwachsenden Rohstoffen. Bioflüssigkeiten können beispielsweise Fette oder Öle oder deren Derivate aus nachwachsenden Rohstoffen sein, beispielsweise Bioöl oder Biodiesel. Auch andere Einsatzstoffe sind denkbar.

Die Rohrleitung 112 kann eingerichtet sein den Einsatzstoff aufzunehmen und/oder zu transportieren. Die Rohrleitung kann mindestens ein Reaktionsrohr sein und/oder aufweisen, in welchem mindestens eine chemische Reaktion ablaufen kann. Die Rohrleitung 112 kann mindestens ein Rohr und/oder mindestens ein Rohrleitungssegment 114 und/oder mindestens eine Rohrleitungsschlange umfassen. Ein Rohrleitungssegment 114 kann ein Teilbereich einer Rohrleitung 112 sein. Geometrie und/oder Oberflächen und/oder Material der Rohrleitung 112 können abhängig von einem zu transportierenden Einsatzstoff sein.

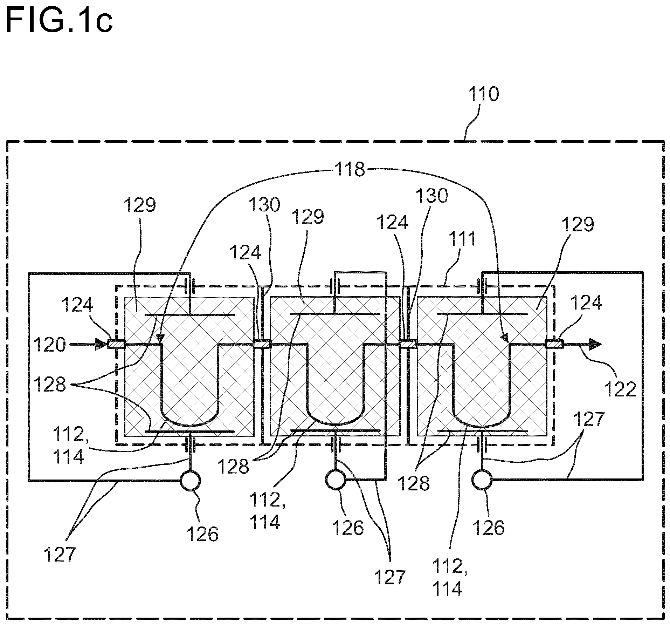

Figur 1a zeigt ein Ausführungsbeispiel, in welchem die Einrichtung eine Rohrleitung 112 aufweist. Die Einrichtung 110 kann eine Mehrzahl an Rohrleitungen 112 und/oder Rohrleitungssegmenten 114 aufweisen, beispielsweise wie in Figur 1b gezeigt zwei oder wie in Figur 1c gezeigt drei. Die Einrichtung 110 kann I Rohrleitungen 112 aufweisen, wobei I eine natürliche Zahl größer oder gleich zwei ist. Beispielsweise kann die Einrichtung 110 mindestens zwei, drei, vier, fünf oder auch mehr Rohrleitungen 112 aufweisen. Die Einrichtung 110 kann beispielsweise bis zu hundert Rohrleitungen 112 aufweisen. Die Rohrleitungen 112 können identisch oder verschieden ausgestaltet sein.

Die Rohrleitungen 112 können durchverbunden sein und somit ein Rohrsystem 118 zur Aufnahme des Einsatzstoffes bilden. Das Rohrsystem 118 kann eine Vorrichtung aus mindestens zwei, insbesondere miteinander verbundenen, Rohrleitungen 112 sein. Das Rohrsystem 118 kann zu- und abführende Rohrleitungen aufweisen. Das Rohrsystem 118 kann mindestens einen Einlass 120 zur Aufnahme des Einsatzstoffes aufweisen. Das Rohrsystem 118 kann mindestens einen Auslass 122 zur Ausgabe des Einsatzstoffes aufweisen. Die Rohrleitungen 112 können derart durchverbunden sein, dass die Rohrleitungen 112 miteinander in einer Fluidverbindung stehen. So können die Rohrleitungen 112 derart angeordnet und verbunden sein, dass der Einsatzstoff die Rohrleitungen 112 nacheinander durchströmt. Mehrere oder sämtliche der Rohrleitungen 112 können seriell und/oder parallel konfiguriert sein. In den Figuren 1a bis 1c werden die Rohrleitungen 112 seriell, also nacheinander, von dem Einsatzstoff durchströmt.

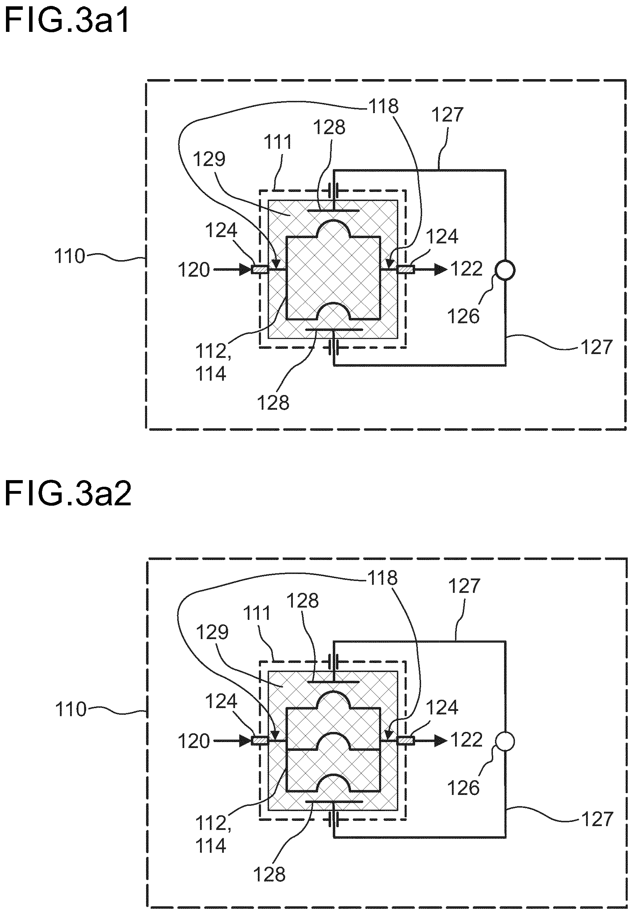

Auch eine parallele Verschaltung kann jedoch möglich sein, derart, dass der Einsatzstoff mindestens zwei Rohrleitungen 112 parallel durchströmen kann. Derartige Ausführungsformen sind beispielsweise in den Figuren 3a1 bis 3b2 gezeigt. Die Rohrleitungen 112, insbesondere die parallel geschalteten Rohrleitungen, können derart eingerichtet sein, unterschiedliche Einsatzstoffe parallel zu transportieren. Insbesondere können für einen Transport von verschiedenen Einsatzstoffen die parallel geschalteten Rohrleitungen 112, zueinander verschiedene Geometrien und/oder Oberflächen und/oder Materialien aufweisen. Insbesondere für den Transport eines Einsatzstoffes, können mehrere oder sämtliche der Rohrleitungen 112 parallel konfiguriert sein, so dass der Einsatzstoff auf jene parallel konfigurierten Rohrleitungen 112 aufteilbar ist.

Auch Kombinationen von einer seriellen und parallelen Schaltung sind denkbar.

Beispielsweise kann die Rohrleitung 112 mindestens eine elektrisch leitfähige Rohrleitung 112 zur Aufnahme des Einsatzstoffes umfassen. Die elektrisch leitfähige Rohrleitung 112 kann eingerichtet sein, elektrischen Strom zu leiten. Auch Ausgestaltungen als elektrisch nichtleitende Rohrleitungen 112 oder schlechtleitende Rohrleitungen 112 sind jedoch denkbar. Die Rohrleitung 112 kann elektrisch leitend oder elektrisch isolierend ausgestaltet sein. Sowohl metallische Rohrleitungen 112 als auch keramische Rohrleitungen 112 sind denkbar.

Bei einer Verwendung von elektrisch leitfähigen Rohrleitungen 112 können die zu- und abführenden Rohrleitungen galvanisch voneinander getrennt sein. Die Rohrleitungen 112 und die zu- und abführenden Rohrleitungen können derart voneinander getrennt sind, dass keine elektrische Leitung und/oder eine tolerierbare elektrische Leitung zwischen den Rohrleitungen 112 und den zu- und abführenden Rohrleitungen erfolgt. Die Einrichtung 110 kann mindestens einen Isolator 124, insbesondere eine Mehrzahl von Isolatoren 124, aufweisen. Die galvanische Trennung zwischen den jeweiligen Rohrleitungen 112 und den zu- und abführenden Rohrleitungen kann durch die Isolatoren 124 gewährleistet sein. Die Isolatoren 124 können einen freien Durchfluss des Einsatzstoffes sicherstellen.

Die Einrichtung 110 weist mindestens ein stromleitendes Medium 129 auf. Die Einrichtung 110 weist mindestens eine Strom- oder Spannungsquelle 126 auf, welche eingerichtet ist einen elektrischen Strom in dem stromleitenden Medium 129 zu erzeugen, welcher die Rohrleitung 112 durch Joulesche Wärme, welche bei Durchgang des elektrischen Stromes durch das stromleitenden Medium 129 entsteht, erwärmt.

Das stromleitenden Medium 129 kann ein beliebiges Medium sein, welches stromleitende und/oder magnetische Eigenschaften aufweist. Magnetische Materialien, also stromleitende Medien 129 mit magnetischen Eigenschaften, können sich aufgrund der Auswirkungen hysteresischer Erwärmung schneller als nichtmagnetische erwärmen. Magnetische Materialien können einen natürlichen Widerstand gegen die schnell wechselnden Magnetfelder aufweisen. Magnetisch schlecht leitende Materialien, beispielsweise Aluminium oder Kupfer, können sich wegen ihrer geringen magnetischen Permeabilität schlechter erwärmen lassen. Beispielsweise kann das stromleitende Medium mindestens ein Material mit ferromagnetischen Eigenschaften sein und/oder umfassen, beispielsweise kann die magnetische Permeabilität von etwa 1 bis 1.000.000 H/m sein. Beispielsweise kann das stromleitende Medium 129 Cobalt, Eisen, Nickel, und/oder Ferrite umfassen. Das stromleitende Medium 129 kann einen spezifischen Widerstand aufweisen. Das stromleitende Medium 129 kann ein hochohmsches Medium sein. Das stromleitende Medium 129 kann einen spezifischen Widerstand ρ von 0,1 Ωmm²/m ≤ ρ ≤ 1000 Ωmm²/m aufweisen, bevorzugt von 10 Ωmm²/m ≤ ρ ≤ 1000 Ωmm²/m. Durch Verwendung eines derartigen stromleitenden Mediums 129 kann eine Minimierung der benötigten Strommenge zur Erhitzung des Einsatzstoffes ermöglicht werden.

Das stromleitende Medium 129 kann einen beliebigen Aggregatzustand aufweisen. Das stromleitende Medium 129 kann einen festen, flüssigen und/oder gasförmigen Aggregatzustand und Gemische z.B. Emulsionen und Suspensionen aufweisen. Das stromleitende Medium 129 kann ein stromleitendes Granulat oder ein stromleitendes Fluid sein. Das stromleitende Medium 129 kann mindestens ein Material aufweisen, ausgewählt aus der Gruppe bestehend aus: Kohlenstoff, Karbide, Silizide, elektrisch leitfähige Öle, Salzschmelzen, anorganische Salze sowie festflüssige Gemische.

Die Strom- und/oder Spannungsquelle 126 kann eine einphasige oder mehrphasige Wechselstrom- und/oder einphasige oder mehrphasige Wechselspannungsquelle oder eine Gleichstrom- und/oder Gleichspannungsquelle umfassen. Die Einrichtung 110 kann mindestens einen Zu- und Ableitung 127 aufweisen, welcher die Strom- und/oder Spannungsquelle 126 mit dem stromleitenden Medium 129 elektrisch verbindet.

Die Einrichtung 110 kann beispielsweise mindestens eine Wechselstrom- und/oder mindestens eine Wechselspannungsquelle aufweisen. Die Wechselstrom- und/oder eine Wechselspannungsquelle kann einphasig oder mehrphasig sein. Die Wechselstromquelle kann eine Stromquelle sein und/oder umfassen, welche eingerichtet ist, einen Wechselstrom bereitzustellen. Der Wechselstrom kann ein elektrischer Strom sein, dessen Polung sich in zeitlich regelmäßiger Wiederholung ändert. Beispielsweise kann der Wechselstrom ein sinusförmiger Wechselstrom sein. Die einphasige Wechselstromquelle kann eine Wechselstromquelle sein und/oder umfassen, welche einen elektrischen Strom mit einer einzigen Phase bereitstellt. Die mehrphasige Wechselstromquelle kann eine Wechselstromquelle sein und/oder umfassen, welche einen elektrischen Strom mit mehr als einer Phase bereitstellt. Die Wechselspannungsquelle kann eine Spannungsquelle sein und/oder umfassen, welche eingerichtet ist, eine Wechselspannung bereitzustellen. Die Wechselspannung kann eine Spannung sein, deren Höhe und Polarität sich zeitlich regelmäßig wiederholt. Beispielsweise kann die Wechselspannung eine sinusförmige Wechselspannung sein. Die von der Wechselspannungsquelle erzeugte Spannung bewirkt einen Stromfluss, insbesondere ein Fließen eines Wechselstroms. Die einphasige Wechselspannungsquelle kann eine Wechselspannungsquelle sein und/oder umfassen, welche den Wechselstrom mit einer einzigen Phase bereitstellt. Die mehrphasige Wechselspannungsquelle kann eine Wechselspannungsquelle sein und/oder umfassen, welche den Wechselstrom mit mehr als einer Phase bereitstellt.

Die Einrichtung 110 kann mindestens eine Gleichstrom- und/oder mindestens eine Gleichspannungsquelle aufweisen. Die Gleichstromquelle kann eine Vorrichtung sein und/oder umfassen, welche eingerichtet ist, einen Gleichstrom bereitzustellen. Die Gleichspannungsquelle kann eine Vorrichtung sein und/oder umfassen, welche eingerichtet ist, eine Gleichspannung bereitzustellen. Die Gleichstromquelle und/oder die Gleichspannungsquelle können eingerichtet sein, einen Gleichstrom in dem stromleitenden Medium zu erzeugen. Der Gleichstrom kann ein in Stärke und Richtung im Wesentlichen konstanter elektrischer Strom sein. Die Gleichspannung kann eine im Wesentlichen konstante elektrische Spannung sein.

Die Einrichtung 110 kann eine Mehrzahl von Strom- und/oder Spannungsquellen 126 aufweisen, siehe beispielsweise Figuren 1b und 1c. Die Strom- und/oder Spannungsquellen ausgewählt sind aus der Gruppe bestehend aus: einphasigen oder mehrphasigen Wechselstrom- und/oder einphasigen oder mehrphasigen Wechselspannungsquellen oder Gleichstrom- und/oder Gleichspannungsquellen, und einer Kombination davon. Die Einrichtung 110 kann 2 bis M verschiedene Strom- und/oder Spannungsquellen aufweisen, wobei M eine natürliche Zahl größer oder gleich drei ist.

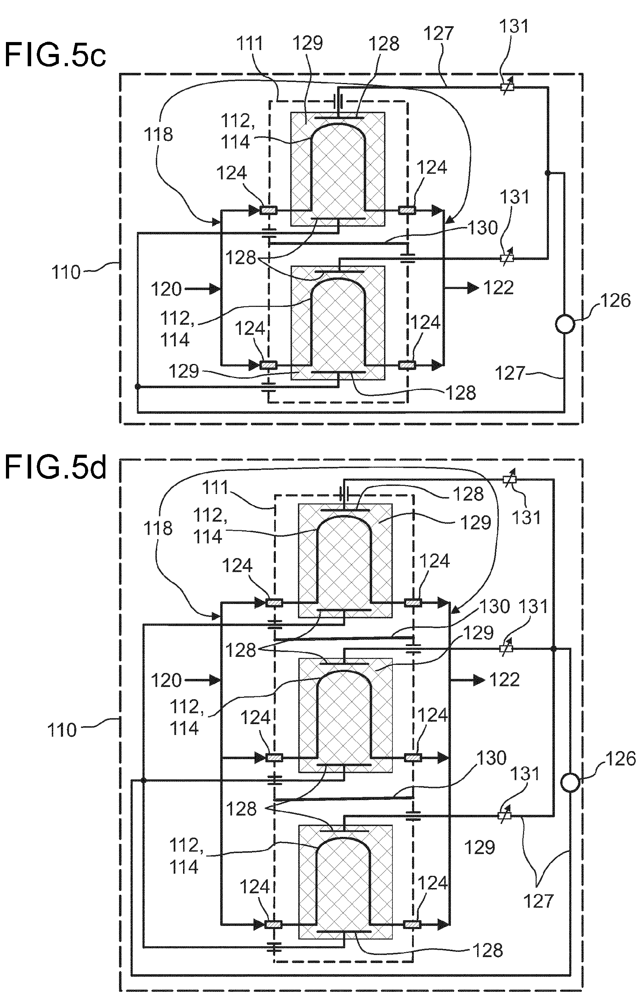

Die Strom- und/oder Spannungsquellen 126 können mit oder ohne Regelungsmöglichkeit mindestens einer elektrischen Ausgangsgröße ausgestaltet sein. Beispielsweise kann die Einrichtung 110 mindestens einen Regler 131 aufweisen. Figuren 5c und 5d zeigen Beispiele zur Verwendung von Reglern 131. Ziel des Reglers kann sein eine entsprechende Spannungs-bzw. Strommenge dem System zuzufügen, also die Stromstärke zu regeln. Die Rohrleitungen 112 können unterschiedliche Strommengen benötigen. Beispielsweise kann die Strommenge abhängig von der Reaktion sein. Beispielsweise kann bei einem Steamcracker zu Beginn der Rohrleitung 112 mehr Energie notwendig sein und am Ende des Rohres weniger. Beispielsweise kann eine Verkokung am Rohr über die Nutzungsdauer zu mehr elektrischen Widerstand führen. Der Regler 131 kann beispielsweise ein außenliegender Regler, also außerhalb des Reaktionsraums 111 angeordneter Regler 131 sein. Die Strom- und/oder Spannungsquellen 126 können unabhängig voneinander elektrisch regelbar sein. Die Strom- und/oder Spannungsquellen 126 können identisch oder verschieden ausgestaltet sein. Beispielsweise kann die Einrichtung 110 derart eingerichtet sein, dass Strom und/oder Spannung für verschiedene Zonen der Einrichtung 110 einstellbar sind. Die Einrichtung 110 kann eine Mehrzahl von Rohrleitungen 112 aufweisen, wobei die Rohrleitungen 112 zu verschiedenen Temperaturbereichen oder Zonen gehören. Die Rohrleitung 112 selbst können ebenfalls Temperaturzonen aufweisen. Durch Verwenden einer Mehrzahl von Strom- und/oder Spannungsquellen 126 kann für verschiedene Zonen insbesondere die Spannung variiert werden. So kann erreicht werden, dass der Strom nicht zu hoch wird, was in zu heißen Rohrleitungen resultieren würde und nicht zu niedrig, was in weniger Produkt oder mehr Nebenprodukte resultieren würde.

Die Einrichtung 110 kann eine Mehrzahl von einphasigen oder mehrphasigen Wechselstrom- oder Wechselspannungsquellen aufweisen. Wie in den Figuren 1b und 1c gezeigt, kann den Rohrleitungen 112 jeweils ein stromleitendes Medium 129 mit einer Wechselstrom- und/oder Wechselspannungsquelle zugeordnet sein, welche mit dem stromleitenden Medium 129 verbunden ist, insbesondere elektrisch über mindestens eine elektrische Verbindung. Weiter sind Ausführungsformen denkbar, in welchen sich mindestens zwei Rohrleitungen 112 ein stromleitendes Medium 129 und eine Wechselstrom- und/oder Wechselspannungsquelle teilen. Zur Verbindung der Wechselstrom- oder Wechselspannungsquelle und den stromleitenden Medien 129 kann der elektrisch beheizbare Reaktor 2 bis N Zu- und Ableitungen 127 aufweisen, wobei N eine natürliche Zahl größer oder gleich drei ist. Die jeweilige Wechselstrom- und/oder Wechselspannungsquelle kann dazu eingerichtet sein, einen elektrischen Strom in dem jeweiligen stromleitenden Medium 129 zu erzeugen zwecks Erzeugung von Joulescher Wärme.

Die Wechselstrom- und/oder Wechselspannungsquellen können entweder geregelt oder ungeregelt sein. Die Wechselstrom- und/oder Wechselspannungsquellen können mit oder ohne Regelungsmöglichkeit mindestens einer elektrischen Ausgangsgröße ausgestaltet sein. Die Ausgangsgröße kann ein Strom und/oder ein Spannungswert und/oder ein Strom und/oder ein Spannungssignal sein. Die Einrichtung 110 kann 2 bis M verschiedene Wechselstrom- und/oder Wechselspannungsquellen aufweisen, wobei M eine natürliche Zahl größer oder gleich drei ist. Die Wechselstrom- und/oder Wechselspannungsquellen können unabhängig voneinander elektrisch regelbar sein. So kann beispielsweise ein verschiedener Strom in dem jeweiligen stromleitenden Medium 129 erzeugt und verschiedene Temperaturen in den Rohrleitungen 112 erreicht werden.

Die Einrichtung 110 kann eine Mehrzahl von Gleichstrom- und/oder Gleichspannungsquellen aufweisen. Wie in den Figuren 1b und 1c gezeigt, kann jeder Rohrleitung 112 ein stromleitendes Medium 129 und eine Gleichstrom- und/oder Gleichspannungsquelle zugeordnet sein, welche mit dem stromleitenden Medium 129 verbunden ist, insbesondere elektrisch über mindestens eine elektrische Verbindung. Zur Verbindung der Gleichstrom- und/oder Gleichspannungsquellen und dem stromleitenden Medium kann die Einrichtung 110 2 bis N positive Pole und/oder Leiter und 2 bis N negative Pole und/oder Leiter aufweisen, wobei N eine natürliche Zahl größer oder gleich drei ist. Die jeweilige Gleichstrom- und/oder Gleichspannungsquelle kann bzw. können dazu eingerichtet sein, einen elektrischen Strom in dem jeweiligen stromleitenden Medium 129 zu erzeugen.

Der erzeugte Strom in dem stromleitenden Medium 129 kann die jeweilige Rohrleitung 112 durch Joulesche Wärme, die bei Durchgang des elektrischen Stromes durch das stromleitende Medium entsteht, zum Erhitzen des Einsatzstoffes erwärmen. Das Erwärmen der Rohrleitung 112 kann ein Vorgang sein und/oder umfassen, welcher zu einer Änderung einer Temperatur der Rohrleitung 112 führt, insbesondere einen Anstieg der Temperatur der Rohrleitung 112. Die Temperatur der Rohrleitung 112 kann konstant bleiben, beispielsweise wenn die in der Rohrleitung 112 stattfindende Reaktion gleich viel Wärme aufnimmt wie sie bekommt.

Die Einrichtung 110 kann eingerichtet sein den Einsatzstoff auf eine Temperatur im Bereich von 200 °C bis 1700 °C, bevorzugt 300 °C bis 1400 °C, besonders bevorzugt 400 °C bis 875 °C, zu erhitzen. Die Rohrleitung 112 kann eingerichtet sein die von dem stromleitenden Medium 129 erzeugte Joulesche Wärme zumindest teilweise aufzunehmen und an den Einsatzstoff zumindest teilweise abzugeben. In der Rohrleitung 112 kann mindestens eine endotherme Reaktion erfolgen. Die endotherme Reaktion kann ein Aufwärmen und/oder ein Vorwärmen des Einsatzstoffes umfassen.

Die Einrichtung 110 kann Teil einer Anlage sein. Beispielsweise kann die Anlage ausgewählt sein aus der Gruppe bestehend aus: einer Anlage zur Durchführung von mindestens einer endothermen Reaktion, einer Anlage zur Aufwärmung, einer Anlage zur Vorwärmung, einem Steamcracker, einem Steamreformer, einer Vorrichtung zur Alkandehydrierung, einem Reformer, einer Vorrichtung zum Trockenreforming, einer Vorrichtung zur Styrolherstellung, einer Vorrichtung zur Ethylbenzoldehydrierung, einer Vorrichtung zum Spalten von Harnstoffen, Isocyanate, Melamin, einem Cracker, einem katalytischen Cracker, einer Vorrichtung zum Dehydrieren.

Das stromleitendem Medium 129 kann in einem beliebigen Behälter 140, beispielsweise einem Rohr oder einem Zylinder, angeordnet sein. Das stromleitende Medium 129 kann direkt oder indirekt durch Aufheizen des Behälters 140 elektrisch beheizt werden.

Das stromleitende Medium 129 und die Rohrleitung 112 können derart zueinander angeordnet sein, dass das stromleitende Medium 129 die Rohrleitung zumindest teilweise umgibt und/oder dass die Rohrleitung das stromleitende Medium zumindest teilweise umgibt. Figuren 1a bis 1c zeigen Ausführungsformen, in welchen das stromleitende Medium 129 die Rohrleitungen 112 vollständig umgibt. Figuren 1a bis 1c zeigen Ausführungsformen, in welchen die Rohrleitungen 112 als Innenzlinder in einem Hohlzylinder angeordnet sind und von dem stromleitenden Medium 129, beispielsweise einem Granulat, umgeben sind. In Figuren 1b und 1c weist die Einrichtung 110 zwei getrennte Behälter 140 für die jeweiligen Rohrleitungen 112 auf.

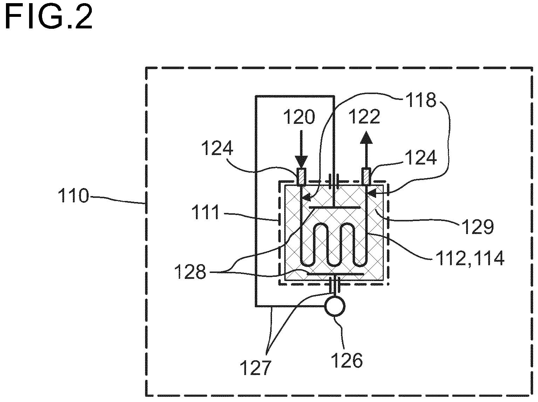

Figur 2 zeigt eine weitere Ausführungsform der erfindungsgemäßen Einrichtung 110. Hinsichtlich der Ausgestaltung der Einrichtung wird auf die Beschreibung zu Figur 1a verwiesen mit folgenden Besonderheiten. In dieser Ausführungsform weist die Einrichtung 110 eine Rohrleitung 112 und/oder Rohrleitungssegmente 114 mit drei Schenkeln oder Windungen auf, welche fluidisch verbunden sind. Auch mehr als drei Schenkel sind jedoch möglich. Die Einrichtung weist den Einlass 120 und den Auslass 122 auf. Der Einsatzstoff kann die Rohrleitung 112 und/oder die Rohrleitungssegmente 114 von dem Einlass 120 zu dem Auslass 122 seriell durchströmen. Zur galvanischen Trennung kann die Einrichtung 110 die Isolatoren 124 aufweisen, beispielsweise wie in Figur 2 gezeigt zwei Isolatoren 124. In dieser Ausführungsform weist die Einrichtung 110 eine Strom- und/oder Spannungsquelle 126 auf. Zur Verbindung der Strom- und/oder Spannungsquelle 126 und dem stromleitenden Medium 129 kann die Einrichtung 110 elektrische Zu- und Ableitungen 127 aufweisen.

Figuren 3a1 bis 3b2 zeigen Ausführungsformen mit parallel geschalteten Rohrleitungen 112 und/oder Rohrleitungssegmente 114. In Figur 3a1 ist eine Ausführungsform mit zwei parallelen Rohrleitung 112 und/oder Rohrleitungssegmenten 114 gezeigt, welche von einem gemeinsamen stromleitenden Medium 129 umgeben werden. In Figur 3a1 weist die Einrichtung 110 drei parallele Rohrleitungen 112 und/oder Rohrleitungssegmenten 114 auf, welche von einem gemeinsamen stromleitenden Medium 129 umgeben werden. Auch andere Anzahlen von parallelen Rohrleitungen 112 und/oder Rohrleitungssegmenten 114 sind denkbar. In den Figuren 3a1 und 3a2 weist die Einrichtung 110 einen Einlass 120 und einen Auslass 122 auf. Die Rohrleitungen 112 und/oder Rohrleitungssegmente 114 können derart zueinander verschaltet sein, dass der Einsatzstoff mindestens zwei Rohrleitungen 112 und/oder Rohrleitungssegmente 114 parallel durchströmen kann. Die parallel geschalteten Rohrleitungen 112 und/oder Rohrleitungssegmente 114 können zueinander verschiedene Geometrien und/oder Oberflächen und/oder Materialien aufweisen. Beispielsweise können die parallel geschalteten Rohrleitungen 112 und/oder Rohrleitungssegmente 114 verschiedenen Anzahlen von Schenkeln oder Windungen aufweisen.

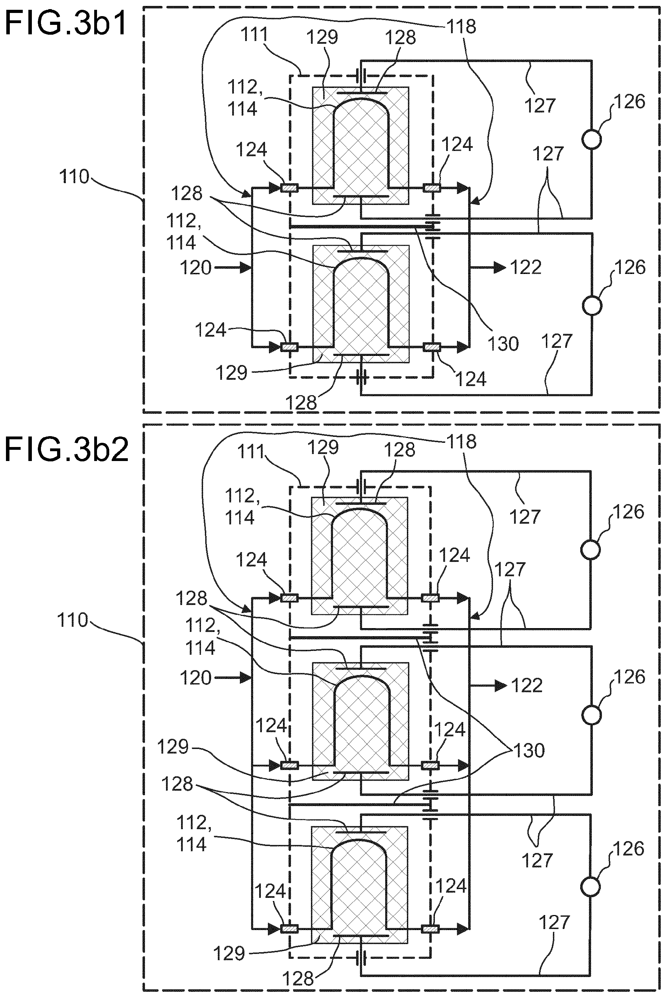

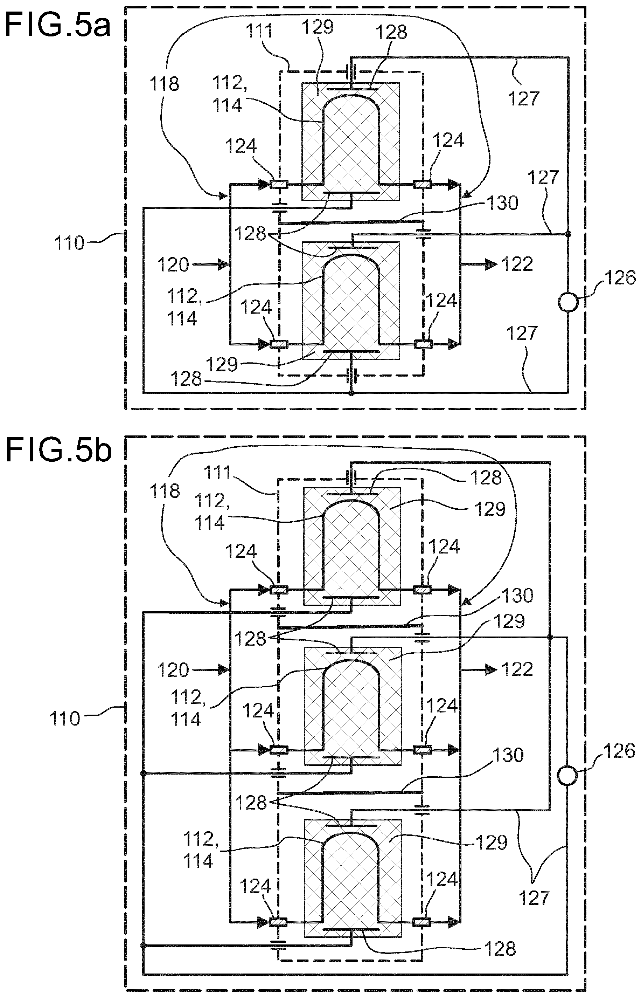

In der Figur 3b1 werden zwei parallele Rohrleitungen 112 und/oder Rohrleitungssegmente 114 gezeigt, welche jeweils von einem stromleitenden Medium 129 umgeben sind, wobei die jeweiligen stromleitenden Medien 129 in getrennten Behältern 140 angeordnet sind. Die stromleitenden Medien 129 können identisch oder verschieden sein. Die stromleitenden Medien 129 können abhängig von einem Temperaturbedarf gewählt werden. In Figur 3b1 weist die Einrichtung 110 für einen Einlass 120 auf, wobei der Einsatzstoff anschließend in zwei Rohrstränge aufgeteilt wird und die Rohrleitungen 112 und/oder Rohrleitungssegmente 114 parallel durchläuft. Nach Durchlauf der parallelen Rohrleitungen 112 und/oder Rohrleitungssegmente 114 kann der Feed wieder zusammengeführt werden und den Reaktivraum 111 durch den Auslass 122 verlassen. Figur 3b2 zeigt eine entsprechende Ausführungsform mit drei parallelen Rohrleitungen 112 und/oder Rohrleitungssegmenten 114. Die Strom- und/oder Spannungsquellen in den Figuren 3a1 bis 3b2 können mit Regelmöglichkeit durch Regler 131 der ohne Regelmöglichkeit ausgestaltet sein. In den Figuren 3 sind Ausführungsformen ohne Regler 131 gezeigt. Jeder Rohrleitung 112 ist in den Figuren 3 eine eigene Strom- bzw. Spannungsquelle 126 und ein Reaktivraum oder Aufwärmung 111, auch als Reaktionsbox bezeichnet, zugeordnet. Die Reaktivräume oder Aufwärmungen 111 können voneinander durch galvanische Wände 130 isoliert sein. In den Figuren 5 werden Ausführungsformen gezeigt, in welchen eine Strom- bzw. Spannungsquelle 126 für mehrere Rohrleitungen 112 verwendet werden. Die gemeinsame Strom- bzw. Spannungsquelle 126 kann mit einem oder mehreren Reglern für mehrere Rohrleitungen 112 verwendet werden.

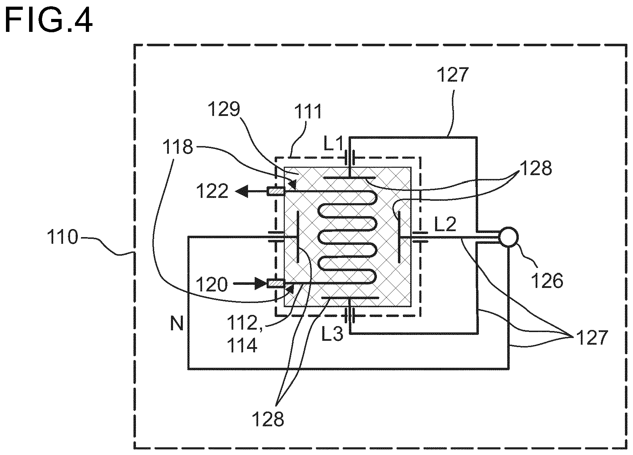

Figur 4 zeigt eine weitere Ausführungsform der erfindungsgemäßen Einrichtung 110. Hinsichtlich der Ausgestaltung der Einrichtung wird auf die Beschreibung zu Figur 2 verwiesen mit folgenden Besonderheiten. In dieser Ausführungsform weist die Einrichtung 110 eine Rohrleitung 112 und/oder Rohrleitungssegmente 114 mit einer Mehrzahl von Schenkeln oder Windungen auf, welche fluidisch verbunden sind. Weiter umfasst die Einrichtung 110 in dieser Ausführungsform eine dreiphasige Wechselstrom- oder Wechselspannungsquelle 126 auf. Die drei Außenleiter werden mit L1, L2 und L3 und der Neutralleiter wird mit N bezeichnet. Auch eine mehrphasige Wechselstrom- oder Wechselspannungsquelle is denkbar mit nx3 Leitern.

Die Rohrleitungen 112 können symmetrische und/oder unsymmetrische Rohre und/oder Kombinationen davon aufweisen. Geometrie und/oder Oberflächen und/oder Material der Rohrleitung 112 kann anhängig von einem zu transportierenden Einsatzstoff sein. Bei einer rein symmetrischen Ausgestaltung kann die Einrichtung 110 Rohrleitungen 112 von einem identischen Rohrtyp aufweisen. Die Einrichtung 110 kann eine beliebige Kombination von Rohrtypen aufweisen kann, welche beispielsweise zudem beliebig parallel oder in Reihe verschaltet sein können. Der Rohrtyp " kann durch bestimmte Merkmale gekennzeichnete Kategorie oder Art von Rohrleitung 112 sein. Der Rohrtyp kann mindestens durch ein Merkmal charakterisiert werden ausgewählt aus der Gruppe bestehend aus: einer horizontalen Ausgestaltung der Rohrleitung 112; einer vertikalen Ausgestaltung der Rohrleitung; einer Länge im Eintritt (l1) und/oder Austritt (l2) und/oder Übergang (l3); einem Durchmesser im Eintritt (d1) und Austritt (d2) und/oder Übergang (d3); Anzahl n von Pässen; Länge pro Pass; Durchmesser pro Pass; Geometrie; Oberfläche; und Material. Die Einrichtung 110 kann eine Kombination von mindestens zwei verschiedenen Rohrtypen aufweisen, welche parallel und/oder in Reihe verschaltet sind. Beispielsweise kann die Einrichtung Rohrleitungen 112 von unterschiedlichen Längen im Eintritt (l1) und/oder Austritt (l2) und/oder Übergang (l3) aufweisen. Beispielsweise kann die Einrichtung 110 Rohrleitungen 112 mit einer Asymmetrie der Durchmesser im Eintritt (d1) und/oder Austritt (d2) und/oder Übergang (d3) aufweisen. Beispielsweise kann die Einrichtung 110 Rohrleitungen 112 mit einer unterschiedlichen Anzahl von Pässen aufweisen. Beispielsweise kann die Einrichtung 110 Rohrleitungen 112 mit Pässen mit unterschiedlichen Längen pro Pass und/oder unterschiedlichem Durchmesser pro Pass aufweisen. Grundsätzlich sind beliebige Kombinationen parallel und/oder in Reihe von allen Rohrtypen denkbar.

Die Einrichtung 110 kann eine Mehrzahl von Einlässen 120 und/oder Auslässen 122 und/oder Produktionsströmen aufweisen. Die Rohrleitungen 112 von verschiedenem oder identischem Rohrtyp können parallel und/oder in Reihe mit mehreren Einlässen 120 und/oder Auslässen 122 angeordnet sein. Rohrleitungen 112 können in verschiedenen Rohrtypen in Form eines Baukastens vorliegen und abhängig von einem Verwendungszweck ausgewählt und beliebig kombiniert werden. Durch eine Verwendung von Rohrleitungen 112 von verschiedenen Rohrtypen kann eine genauere Temperaturführung, und/oder eine Anpassung der Reaktion bei schwankendem Feed und/oder eine selektive Ausbeute der Reaktion und/oder eine optimierte Verfahrenstechnik ermöglicht werden. Die Rohrleitungen 112 können identische oder verschiedene Geometrien und/oder Oberflächen und/oder Materialien aufweisen.

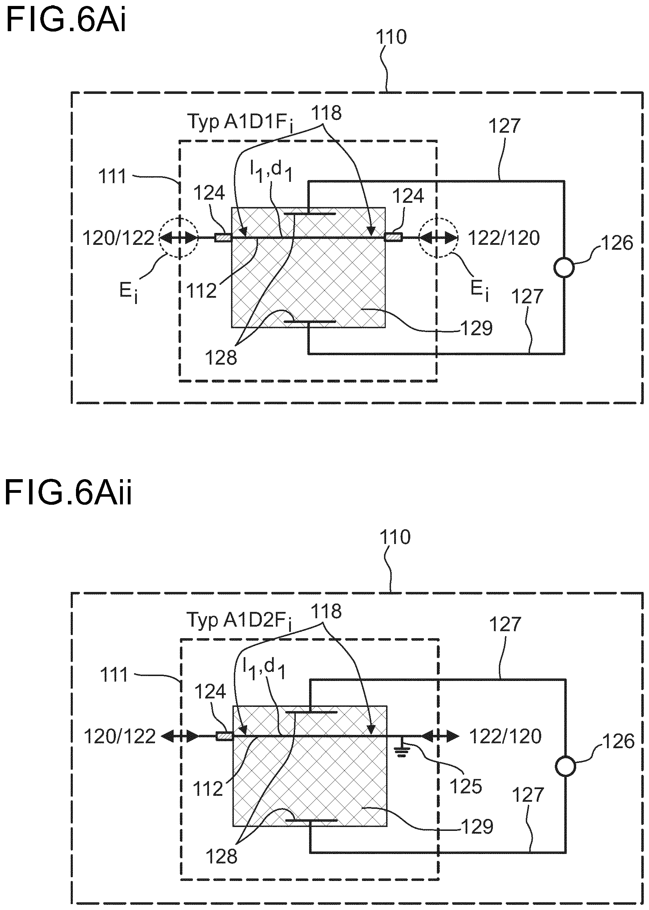

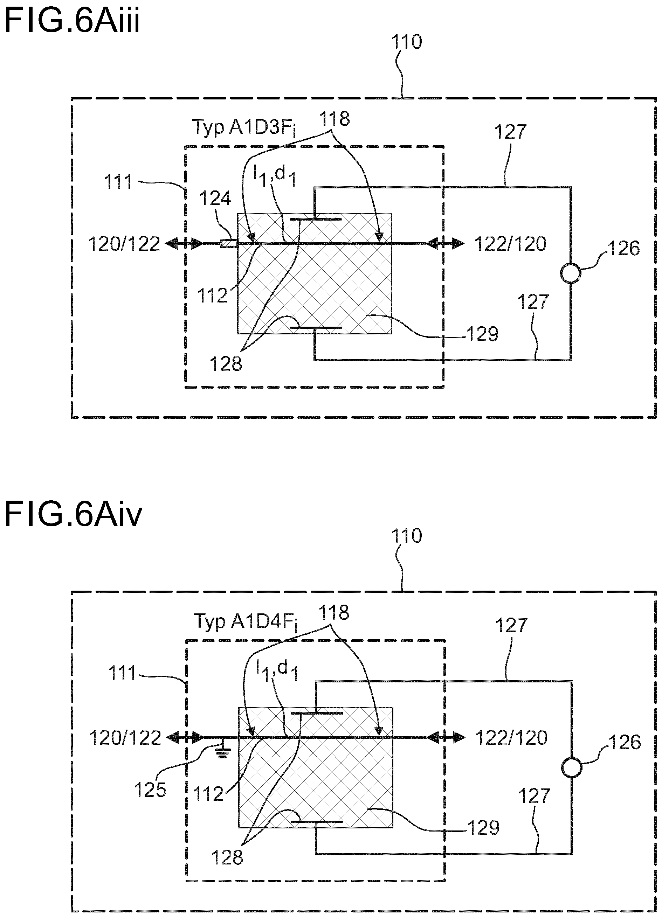

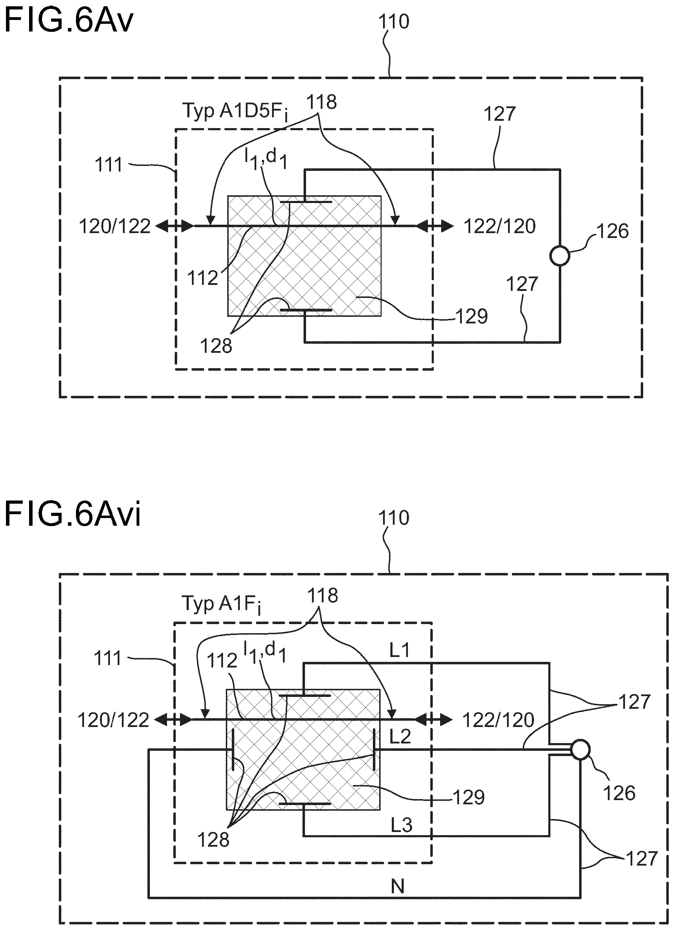

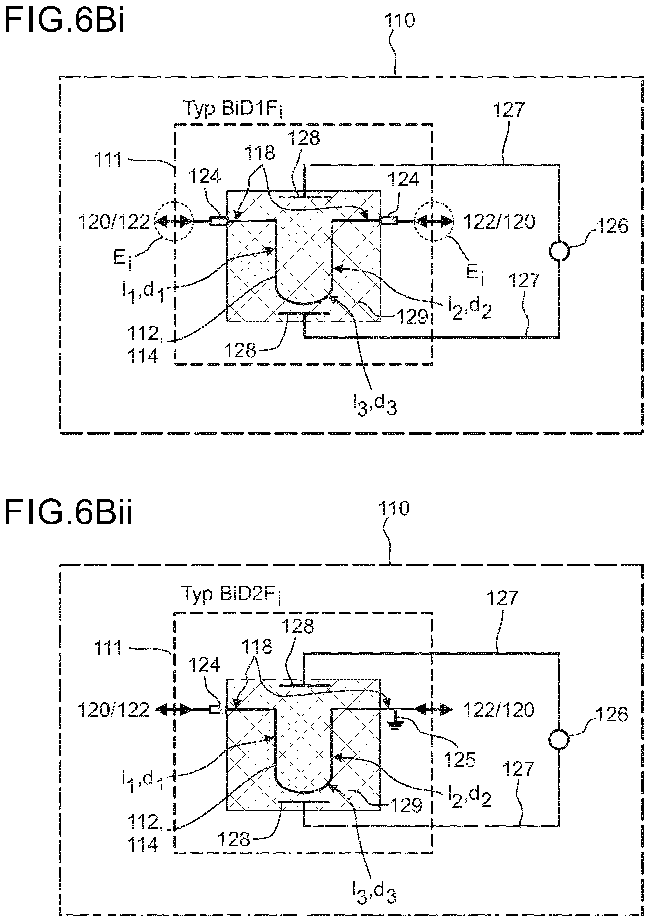

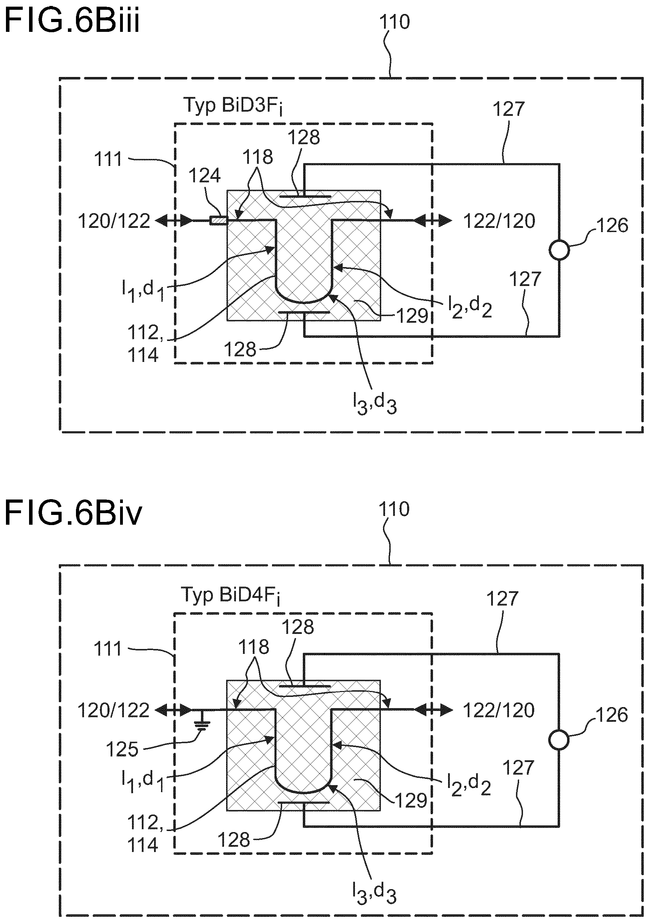

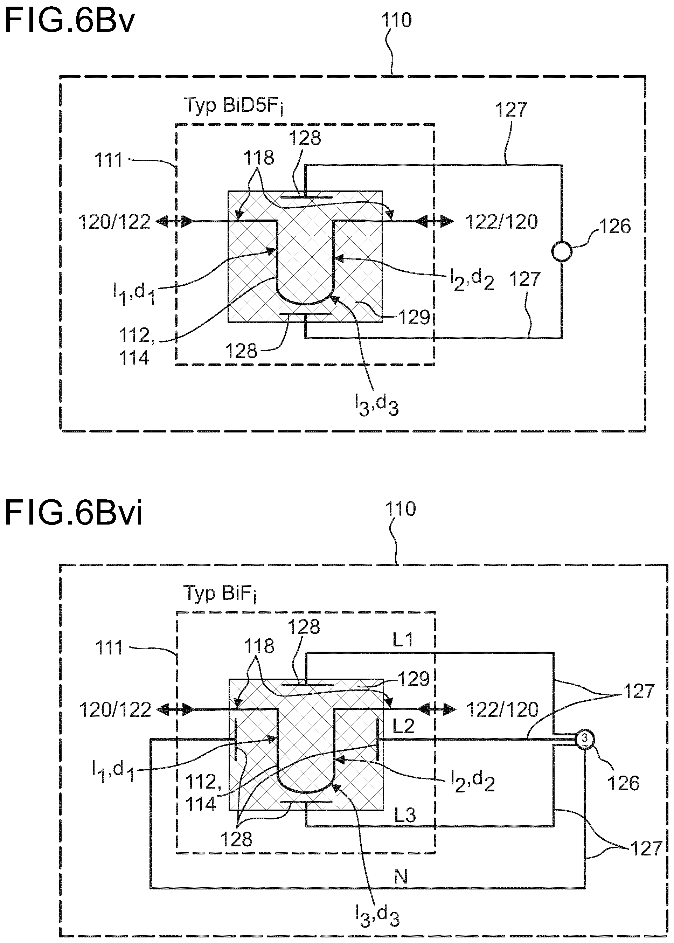

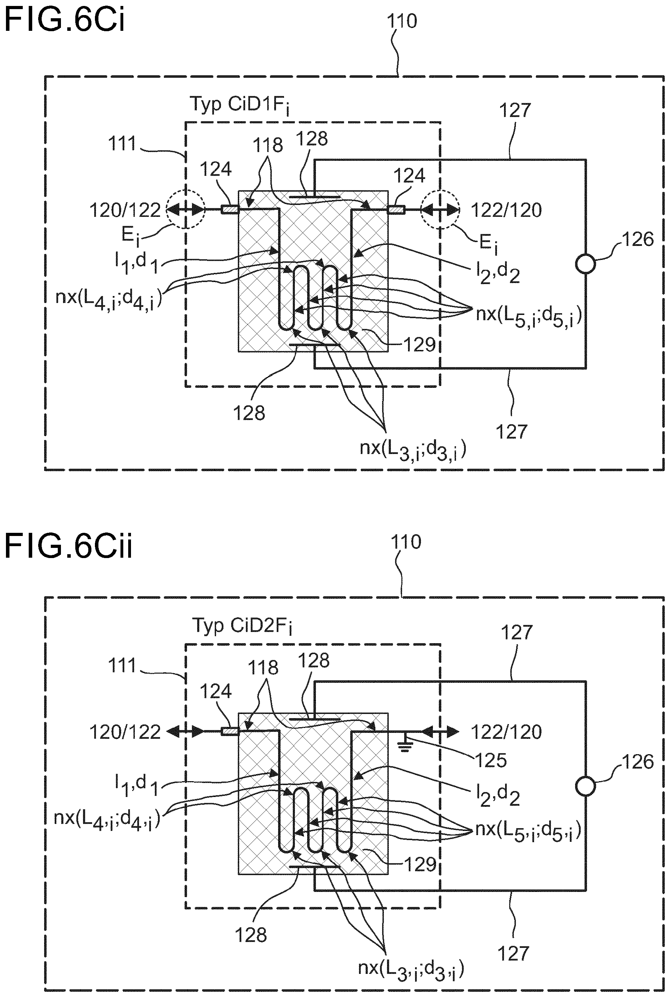

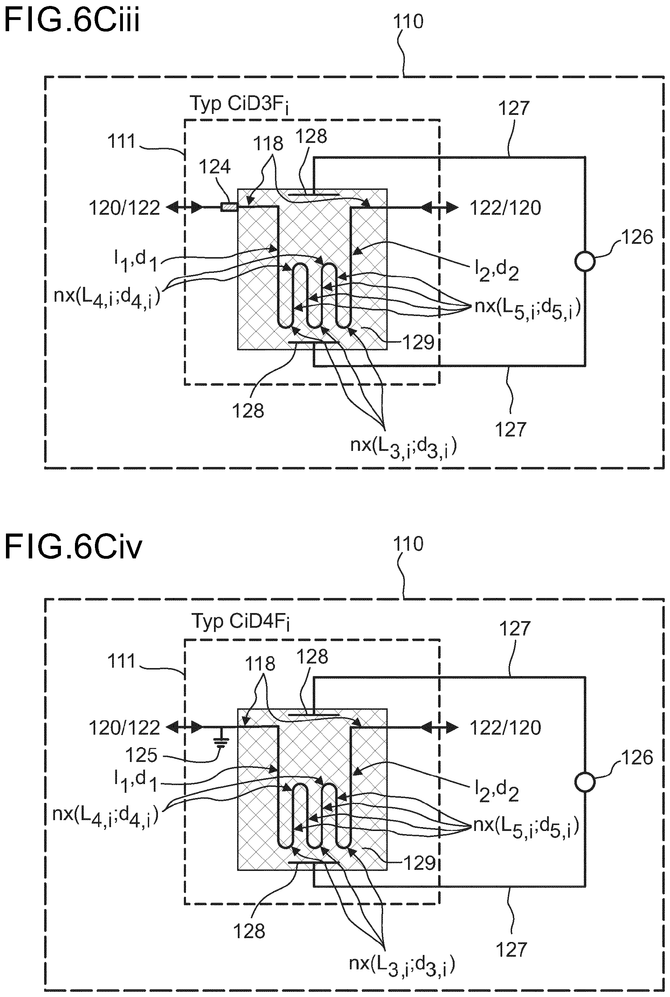

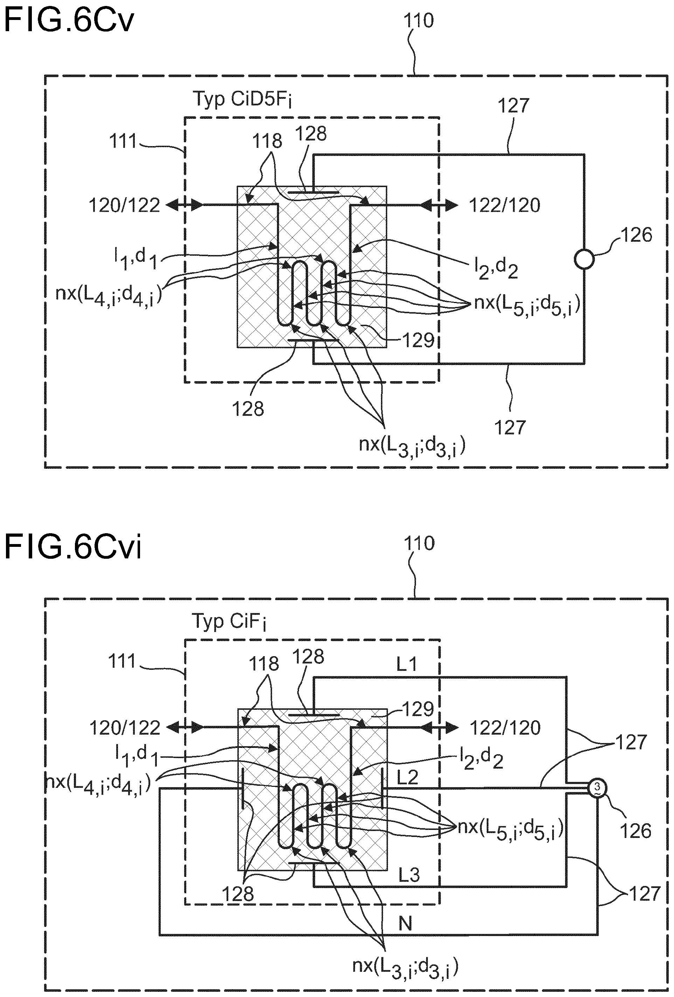

Figuren 6Ai bis 6Civ zeigen exemplarisch mögliche Ausführungsformen von Rohrtypen in schematischer Darstellung. Dabei ist in den Figuren 6A1 bis 6iv jeweils der Rohrtyp angegeben. Dieser kann in die folgenden Kategorien eingeteilt werden, wobei alle denkbaren Kombination der Kategorien möglich sind:
- Kategorie A gibt einen Verlauf der Rohrleitung 112 und/oder eines Rohrleitungssegments 114 an, wobei A1 einen Rohrtyp mit horizontalem Verlauf und A2 einen Rohrtyp mit vertikalem, also einem zu dem horizontalen Verlauf senkrechten Verlauf, kennzeichnet.
- Kategorie B gibt ein Verhältnis von Längen im Eintritt (l1) und/oder Austritt (l2) und/oder Durchmesser im Eintritt (d1) und/oder Austritt (d2) und/oder Übergang (d3) an, wobei in dem Baukasten 134 sechs verschiedene Kombinationsmöglichkeiten aufgeführt sind.
- Kategorie C gibt Verhältnisse von Längen im Eintritt (l1) und/oder Austritt (l2) und Längen von Pässen an. Hier sind sämtliche Kombinationen denkbar, welche vorliegend mit Ci gekennzeichnet werden.
- Kategorie D gibt an, ob das die mindestens eine Rohrleitung 112 und/oder das mindestens eine Rohrleitungssegments 114 mit oder ohne galvanische Trennung und/oder Erdung 125 ausgestaltet ist. Die galvanische Trennung kann beispielsweise unter Verwendung eines Isolators 124 ausgestaltet sein. D1 bezeichnet einen Rohrtyp, bei welchem eine galvanische Trennung am Einlass 120 der Rohrleitung 112 und/oder des Rohrsegments 114 und eine galvanische Trennung am Auslass 122 der Rohrleitung 112 und/oder des Rohrsegments 114 vorgesehen ist. D2 bezeichnet einen Rohrtyp, bei welchem eine galvanische Trennung am Einlass 120 der Rohrleitung 112 und/oder des Rohrsegments 114 und eine Erdung 125 am Auslass 122 der Rohrleitung 112 und/oder des Rohrsegments 114 vorgesehen ist. D3 bezeichnet einen Rohrtyp, bei welchem eine galvanische Trennung nur am Einlass 120 der Rohrleitung 112 und/oder des Rohrsegments 114 vorgesehen ist. D4 bezeichnet einen Rohrtyp, bei welchem eine Erdung 125 nur am Einlass 120 der Rohrleitung 112 und/oder des Rohrsegments 114 vorgesehen ist. D5 bezeichnet einen Rohrtyp, bei welchem die Rohrleitung 112 und/oder das Rohrsegments 114 ohne Erdung 125 am Einlass 120 und Auslass 122 und/oder ohne galvanische Trennung am Einlass 120 und Auslass 122 vorgesehen ist.
- Kategorie E gibt eine Flussrichtung des Einsatzstoffes an. Der Einsatzstoff kann grundsätzlich in zwei Flussrichtungen fließen. Ein Rohrtyp, bei welchem der Einsatzstoff in eine erste Flussrichtung fließt wird als Rohrtyp E1 bezeichnet, und ein Rohrtyp, bei welchem der Einsatzstoff in eine zweite Flussrichtung fließt wird als Rohrtyp E2 bezeichnet. Die erste und die zweite Flussrichtung können entgegengesetzt sein.
- Kategorie F beinhaltet Anzahl der Elektroden: F1 gibt dabei an, dass eine Anzahl Elektroden ≤ 2 ist, beispielsweise bei einer Gleichstromquelle oder einer Wechselstromquelle. F2 gibt an, dass eine Anzahl der Elektroden > 2 beispielsweise für eine Drehstromquelle.

In Figur 6Ai ist eine Rohrleitung 112 und/oder ein Rohrleitungssegment 114 vom Rohrtyp A1D1Fi gezeigt. Die Rohrleitung 112 und/oder das Rohrleitungssegment 114 weist einen horizontalen Verlauf aufweist. Die Einrichtung 110 weist in dieser Ausführungsform zwei Isolatoren 124 auf, welche nach dem Einlass 120 und vor dem Auslass 122 angeordnet sind. Hinsichtlich der weiteren Elemente der Figur 6Ai kann auf die Beschreibung der Figur 1a verwiesen werden. In Figur 6Ai sind mögliche Flussrichtungen Ei exemplarisch mit einem Doppelpfeil an Einlass 120 und Auslass 122 dargestellt. In den weiteren Figuren 6 werden Einlass 120 und Auslass 122 gemeinsam bezeichnet.

Das Ausführungsbeispiel in Figur 6Aii zeigt einen Rohrtyp A1D2Fi und unterscheidet sich von Figur 6Ai darin, dass die Einrichtung 110 nur einen Isolator 124 aufweist, wobei statt des zweiten Isolators eine Erdung 125 vorgesehen ist. Das Ausführungsbeispiel in Figur 6Aiii zeigt einen Rohrtyp A1D3Fi und unterscheidet sich von Figur 6Aii darin, dass keine Erdung 125 vorgesehen ist. In Figur 6Aiv, Rohrtyp A1D4Fi, weist die Einrichtung 110, im Vergleich zu Figur 6Aiii, anstatt des Isolators nur eine Erdung 125 auf. Auch Ausführungsformen ohne Isolatoren 124 oder Erdungen 125 sind möglich, wie in Figur 6Av, Rohrtyp A1D5Fi, dargestellt.

In Figur 6Bi, Rohrtyp BiD1Fi, sind Längen im Eintritt (11), Austritt (l2) und Übergang (l3) sowie Durchmesser im Eintritt (d1), Austritt (d2) und Übergang (d3) dargestellt. Die Einrichtung 110 kann Rohrleitungen 112 und/oder Rohrleitungssegmente 114 mit verschiedenen Längen im Eintritt (l1) und/oder Austritt (l2) und/oder Übergang (l3) und/oder Durchmesser im Eintritt (d1) und/oder Austritt (d2) und/oder Übergang (d3) aufweisen. Hinsichtlich der weiteren Elemente der Figur 6Bi kann auf die Beschreibung der Figuren 1 verwiesen werden. Das Ausführungsbeispiel in Figur 6Bii zeigt einen Rohrtyp BiD2Fi und unterscheidet sich von Figur 6Bi darin, dass die Einrichtung 110 nur einen Isolator 124 aufweist, wobei statt des zweiten Isolators eine Erdung 125 vorgesehen ist. Das Ausführungsbeispiel in Figur 6Biii zeigt einen Rohrtyp BiD3Fi und unterscheidet sich von Figur 6Bii darin, dass keine Erdung 125 vorgesehen ist. In Figur 6Biv, Rohrtyp BiD4Fi, weist die Einrichtung 110, im Vergleich zu Figur 6Biii, anstatt des Isolators nur eine Erdung 125 auf. Auch Ausführungsformen ohne Isolatoren 124 oder Erdungen 125 sind möglich, wie in Figur 6Bv, Rohrtyp BiD5Fi, dargestellt.

Figur 6Ci, Rohrtyp CiD1Fi, zeigt ein Ausführungsbeispiel, in welcher die Einrichtung 110 Rohrleitungen 112 und/oder Rohrleitungssegmente 114 mit einer Mehrzahl n von Pässen aufweist, beispielsweise wie hier dargestellt drei. Die Pässe können jeweils verschiedenen Längen l3, l4, l5 und/oder Durchmesser d3, d4, d5 aufweisen. Hinsichtlich der weiteren Elemente der Figur 6Ci kann auf die Beschreibung der Figur 2 verwiesen werden. Das Ausführungsbeispiel in Figur 6Cii zeigt einen Rohrtyp CiD2Fi und unterscheidet sich von Figur 6Ci darin, dass die Einrichtung 110 nur einen Isolator 124 aufweist, wobei statt des zweiten Isolators eine Erdung 125 vorgesehen ist. Das Ausführungsbeispiel in Figur 6Ciii zeigt einen Rohrtyp CiD3Fi und unterscheidet sich von Figur 6Cii darin, dass keine Erdung 125 vorgesehen ist. In Figur 6Civ, Rohrtyp CiD4Fi, weist die Einrichtung 110, im Vergleich zu Figur 6Ciii, anstatt des Isolators nur eine Erdung 125 auf. Auch Ausführungsformen ohne Isolatoren 124 oder Erdungen 125 sind möglich, wie in Figur 6Cv, Rohrtyp CiD5Fi, dargestellt. Figuren 6Ci bis 6Cvi zeigen Rohrtypen, bei welchen eine Einspeisung des Wechselstroms über einen Anschluss der elektrischen Zu- bzw. Ableitung 127 am Anfang bzw. am Ende der Rohrleitung 112 und/oder dem Rohrsegment 114 erfolgt. Figur 6Cvi zeigt einen Rohrtyp CiFi, bei welchem eine Einspeisung des Wechselstroms mittig an der Rohrleitung 112 und/oder an dem Rohrsegment 114.

Die Einrichtung 110 kann eine Kombination von mindestens zwei verschiedenen Rohrtypen aufweisen, welche parallel und/oder in Reihe verschaltet sind. Beispielsweise kann die Einrichtung 110 Rohrleitungen 112 und/oder Rohrleitungssegmente 114 von unterschiedlichen Längen im Eintritt (l1) und/oder Austritt (l2) und/oder Übergang (l3) aufweisen. Beispielsweise kann die Einrichtung Rohrleitungen und/oder Rohrleitungssegmente mit einer Asymmetrie der Durchmesser im Eintritt (d1) und/oder Austritt (d2) und/oder Übergang (d3) aufweisen. Beispielsweise kann die Einrichtung 110 Rohrleitungen 112 und/oder Rohrleitungssegmente 114 mit einer unterschiedlichen Anzahl von Pässen aufweisen. Beispielsweise kann die Einrichtung 110 Rohrleitungen 112 und/oder Rohrleitungssegmente 114 mit Pässen mit unterschiedlichen Längen pro Pass und/oder unterschiedlichem Durchmesser pro Pass aufweisen.

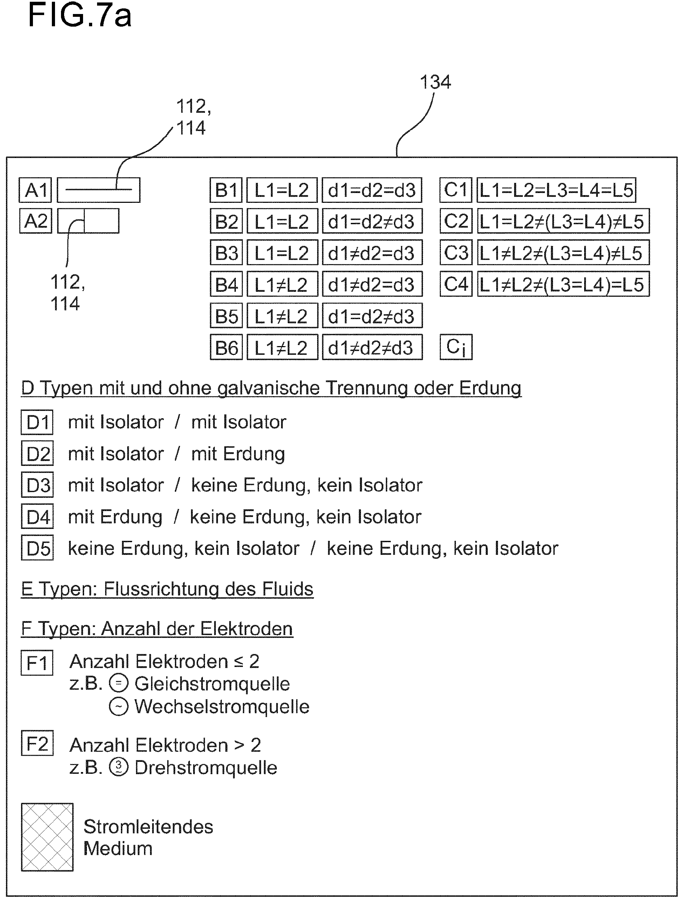

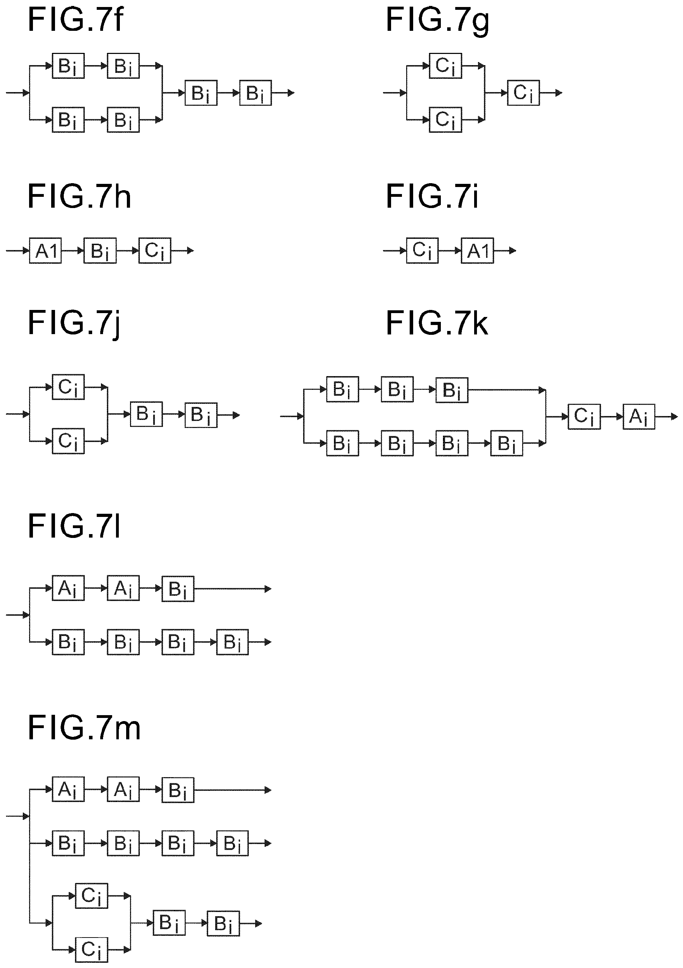

Grundsätzlich sind beliebige Kombinationen parallel und/oder in Reihe von allen Rohrtypen denkbar. Rohrleitungen 112 und/oder Rohrleitungssegmente 114 können in verschiedenen Rohrtypen in Form eines Baukastens 134 vorliegen und abhängig von einem Verwendungszweck ausgewählt und beliebig kombiniert werden. Figur 7a zeigt eine Ausführungsform eines Baukastens 134 mit verschiedenen Rohrtypen.

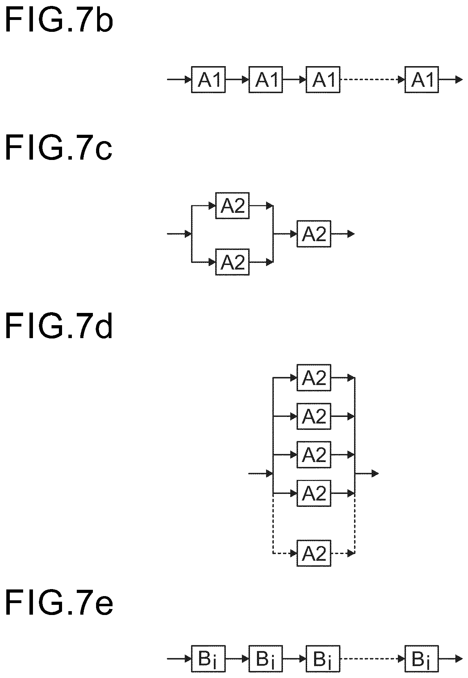

Figuren 7b bis 7y zeigen erfindungsgemäße Ausführungsbeispiele von Kombinationen von Rohrleitungen 112 und/oder Rohrleitungssegmenten 114 vom gleichen und/oder verschiedenen Rohrtyp an. Figur 7b zeigt ein Ausführungsbeispiel mit drei horizontalen Rohrleitungen 112 und/oder Rohrleitungssegmenten 114 vom Rohrtyp A1, welche nacheinander angeordnet sind. Figur 7c zeigt zwei parallel geschaltete, vertikale Rohre vom Rohrtyp A2 und eine nachgeschaltete Rohrleitung 112 und/oder ein nachgeschaltetes Rohrleitungssegment 114 ebenfalls vom Rohrtyp A2. In Figur 7d sind eine Mehrzahl von Rohrleitungen 112 und/oder Rohrleitungssegmenten 114 vom Rohrtyp A2 gezeigt, welche sämtlich parallelgeschaltet sind. In Figur 7e ist eine Ausführungsform gezeigt, in welcher eine Mehrzahl von Rohrtypen der Kategorie B nacheinander angeordnet sind. Die Rohrleitungen 112 und/oder Rohrleitungssegmente 114 können hierbei identische oder verschiedene Rohrtypen der Kategorie B sein, welches mit Bi gekennzeichnet ist. Figur 7f zeigt eine Ausführungsform mit sechs Rohrleitungen 112 und/oder Rohrleitungssegmenten 114 der Kategorie B, wobei in zwei parallelen Strängen jeweils zwei Rohrleitungen 112 und/oder Rohrleitungssegmente 114 angeordnet sind und zwei weitere Rohrleitungen 112 und/oder Rohrleitungssegmente 114 nachgeschaltet sind. Figur 7g zeigt eine Ausführungsform mit Rohrleitungen 112 und/oder Rohrleitungssegmenten 114 der Kategorie C, wobei zwei Rohrleitungen 112 und/oder Rohrleitungssegmente 114 parallelgeschaltet und eine Rohrleitung 112 und/oder ein Rohrleitungssegment 114 nachgeschaltet ist. Auch Mischformen der Kategorien A, B und C sind möglich, wie in den Figuren 7h bis 7m gezeigt ist. Die Einrichtung 110 kann eine Mehrzahl von Feed-Einlässen und/oder Feed-Auslässen und/oder Produktionsströmen aufweisen. Die Rohrleitungen 112 und/oder Rohrleitungssegmente 114 von verschiedenem oder identischem Rohrtyp können parallel und/oder in Reihe mit mehreren Feed-Einlässen und/oder Feed-Auslässen angeordnet sein, wie beispielsweise in den Figuren 7k und 7m dargestellt ist.

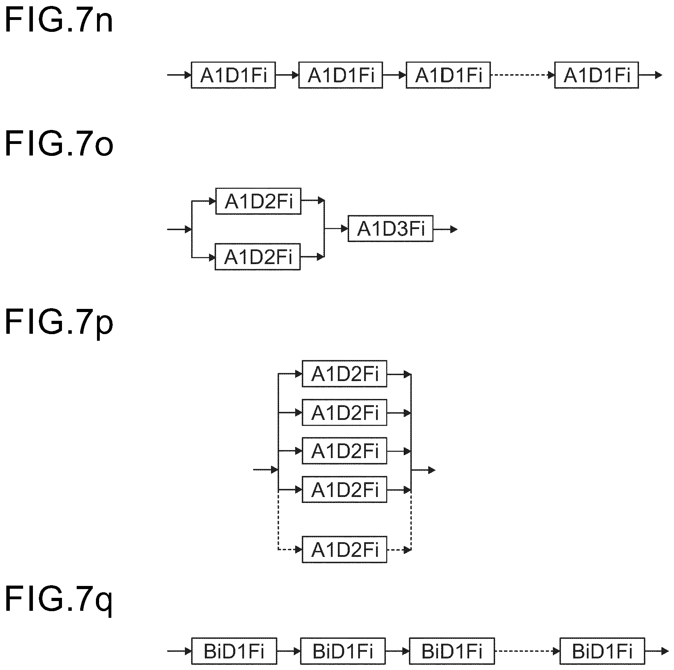

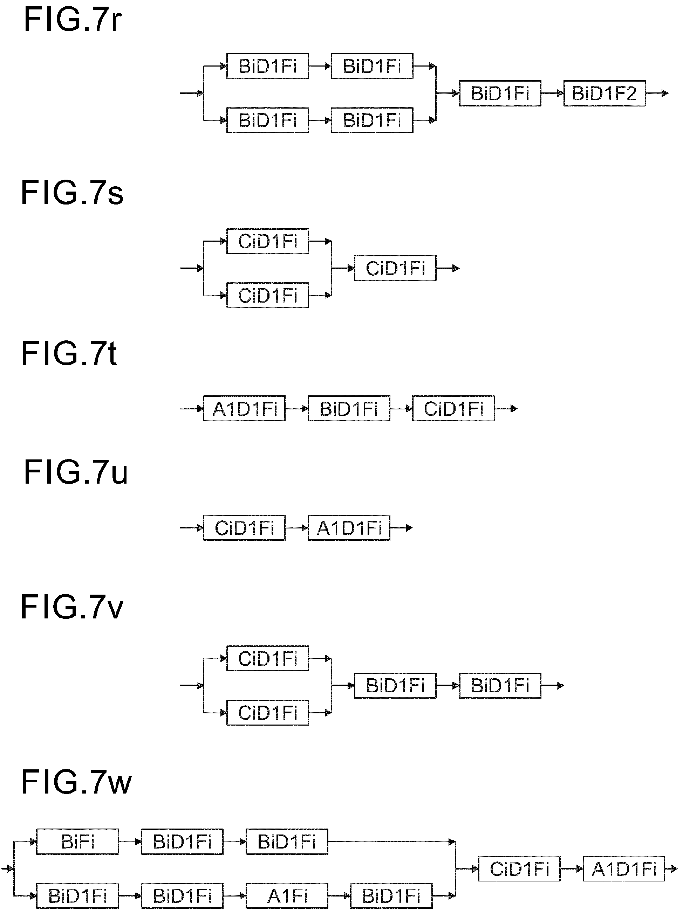

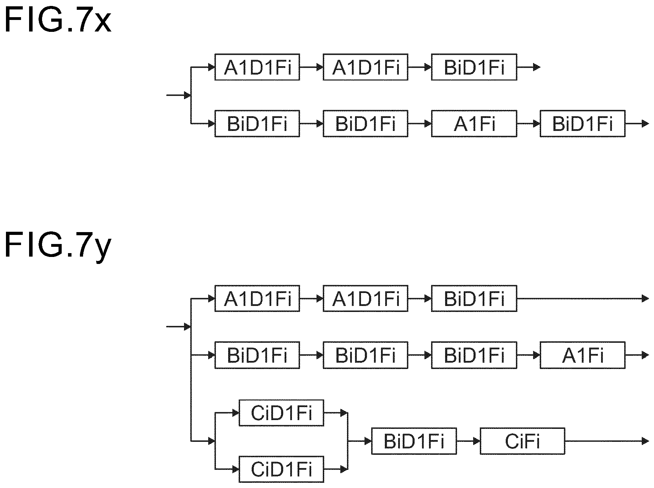

Figuren 7n bis 7p zeigen beispielhafte Kombination von Rohrleitungen 112 und/oder von Rohrleitungssegmenten 114 der Kategorien A, D und Fi. Figuren 7q und 7r zeigen beispielhafte Kombination von Rohrleitungen 112 und/oder von Rohrleitungssegmenten 114 der Kategorien B, D und Fi. Figur 7s zeigt eine beispielshafte Kombination von Rohrleitungen 112 und/oder von Rohrleitungssegmenten 114 der Kategorien C, D und Fi. Figur 7t zeigt eine beispielshafte Kombination von Rohrleitungen 112 und/oder von Rohrleitungssegmenten 114 der Kategorien A, D und Fi. Figur 7u zeigt eine beispielshafte Kombination von Rohrleitungen 112 und/oder von Rohrleitungssegmenten 114 der Kategorien A, C, D und Fi. Figur 7v zeigt eine beispielshafte Kombination von Rohrleitungen 112 und/oder von Rohrleitungssegmenten 114 der Kategorien B, C, D und Fi. Figur 7w und 7y zeigen beispielshafte Kombinationen von Rohrleitungen 112 und/oder von Rohrleitungssegmenten 114 der Kategorien A, B, C, D und Fi. Figur 7x zeigt eine beispielshafte Kombination von Rohrleitungen 112 und/oder von Rohrleitungssegmenten 114 der Kategorien A, B, D und Fi. Die Einrichtung 110 kann eine Mehrzahl von Feed-Einlässen und/oder Feed-Auslässen und/oder Produktionsströmen aufweisen. Die Rohrleitungen 112 und/oder Rohrleitungssegmente 114 von verschiedenem oder identischem Rohrtyp der Kategorien A, B, C, D und E können parallel und/oder in Reihe mit mehreren Feed-Einlässen und/oder Feed-Auslässen angeordnet sein. Beispiele für eine Mehrzahl von Feed-Einlässen und/oder Feed-Auslässen und/oder Produktionsströmen sind in den Figuren 7o, 7p, 7r, 7s, 7v bis 7y dargestellt.

Durch eine Verwendung von Rohrleitungen 112 und/oder Rohrleitungssegmenten 114 von verschiedenen Rohrtypen kann eine genauere Temperaturführung, und/oder eine Anpassung der Reaktion bei schwankendem Feed und/oder eine selektive Ausbeute der Reaktion und/oder eine optimierte Verfahrenstechnik ermöglicht werden.

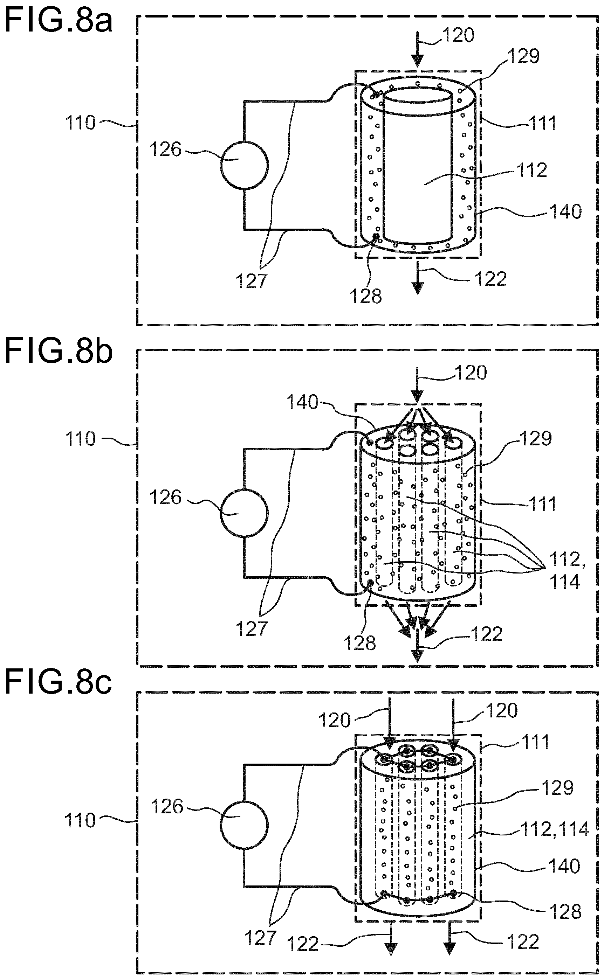

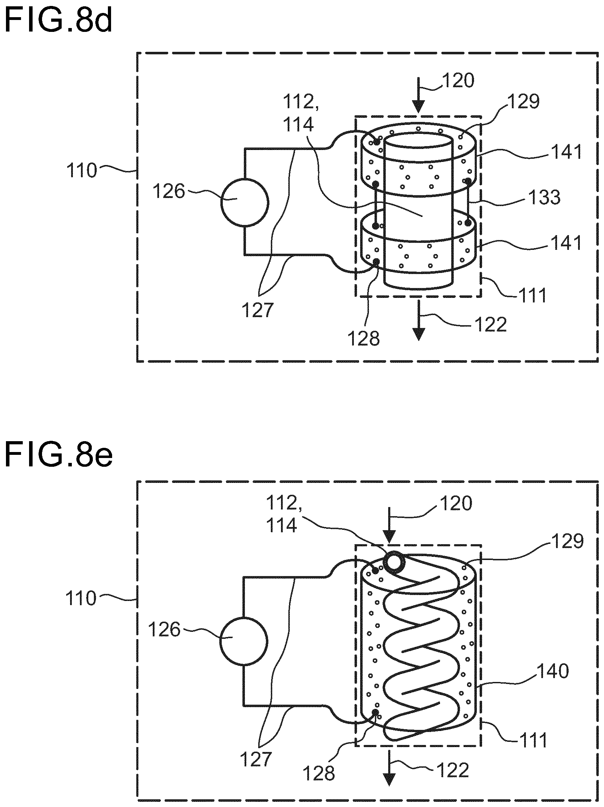

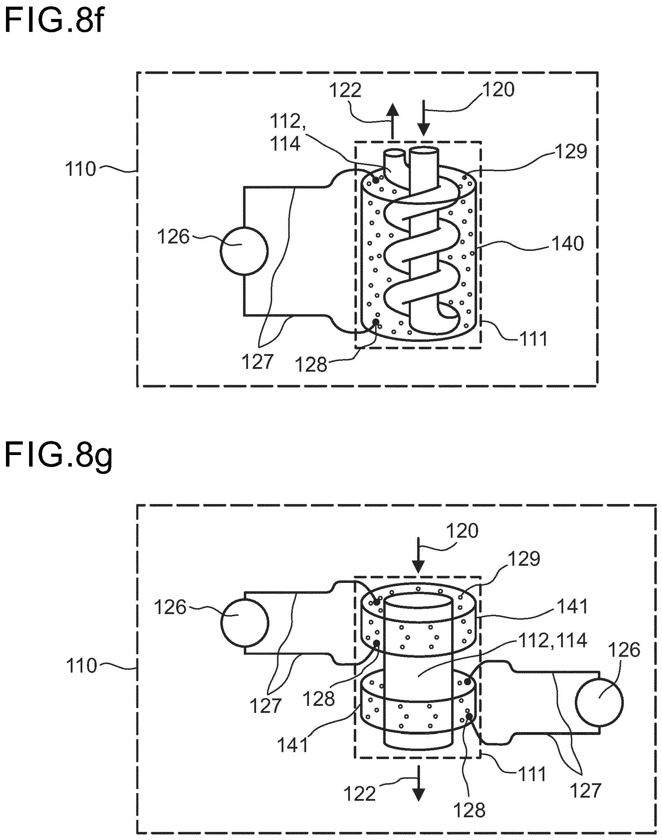

Figuren 8a bis 8e zeigen schematische Darstellungen weiterer Ausführungsbeispiele der erfindungsgemäßen Einrichtung. Figur 8a zeigt einen Behälter 140 in Form eines Hohlzylinders, welcher das stromleitende Medium 129 aufweist und eine Rohrleitung 112 in Form eines Innenzylinders umgibt. Figur 8b zeigt eine Ausführungsform, in welcher die Einrichtung 110 mehrere Rohrleitungen 112 mit Einsatzstoff, auch als Reaktionsfluid bezeichnet, aufweist, wobei um die Rohrleitungen 112 herum ist ein Behälter 140 in Form eines Zylinders angeordnet, welcher mit dem stromleitendem Medium 129 gefüllt ist. Figur 8c zeigt eine Ausführungsform, in welcher die Einrichtung 110 mehrere Rohre mit stromleitendem Medium 129 aufweist, wobei um die Rohre herum eine Rohrleitung 112 mit dem Einsatzstoff angeordnet ist. Wie in Figur 8d gezeigt, können mehrere Zylinder mit stromleitendem Medium 129 schellenförmig um die Rohrleitung 112 mit dem Einsatzstoff angeordnet sein. Wie in Figur 8e gezeigt, kann die Rohrleitung 112 spiralförmig sein und um die Rohrleitung 112 herum ein Zylinder mit dem stromleitenden Medium 129 angeordnet sein. Figur 8f zeigt eine unsymmetrische Rohrleitung 112, in welcher Einlass 120 und Auslass 122 an der gleichen Seite der Rohrleitung 112 angeordnet sind. Figur 8g zeigt eine weitere schellenförmige Ausführungsform, wobei jeder Schelle 141 eine eigene Strom- bzw. Spannungsquelle 126 zugeordnet ist, damit in dieser Ausführungsform die Schellen 141 separat beheizt werden. Beispielsweise kann eine der Schellen 141 für eine Vorwärmung und die andere für eine Reaktion oder beide Schellen 141 können für Vorwärmungen oder für Reaktionen verwendet werden.

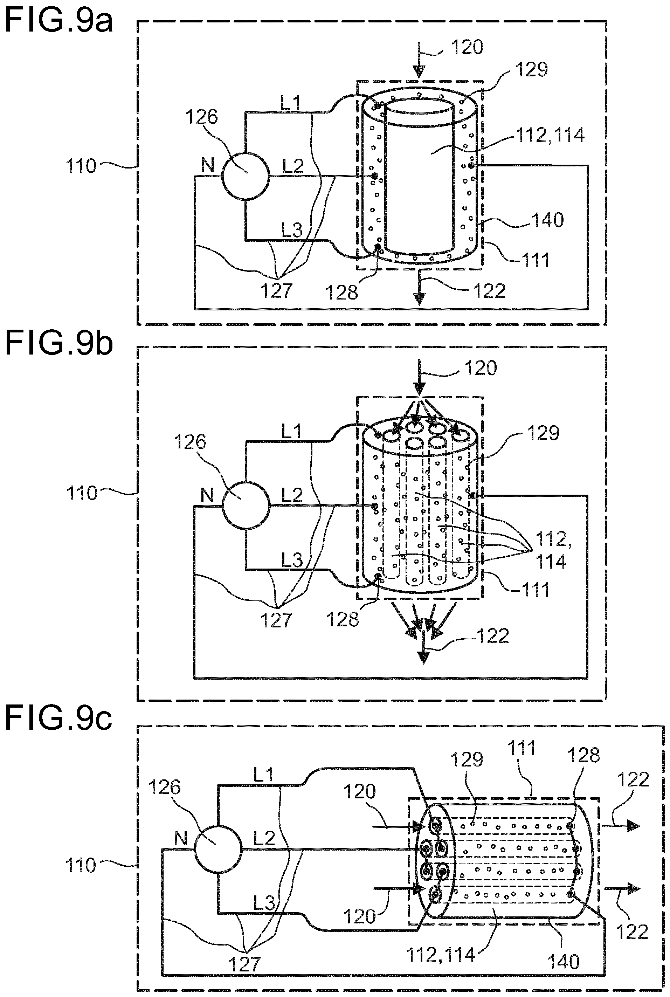

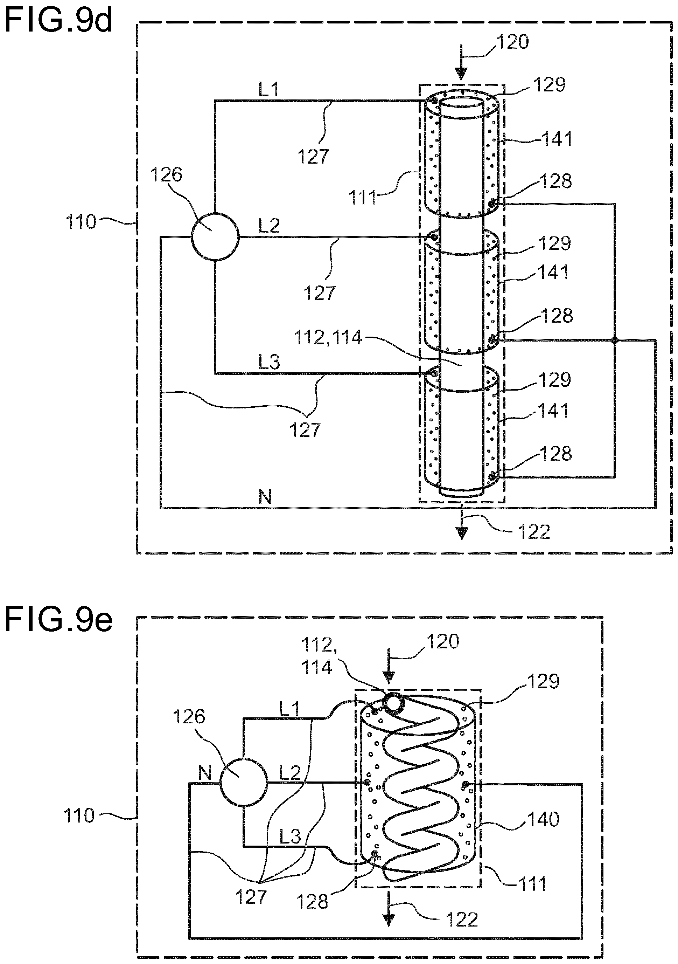

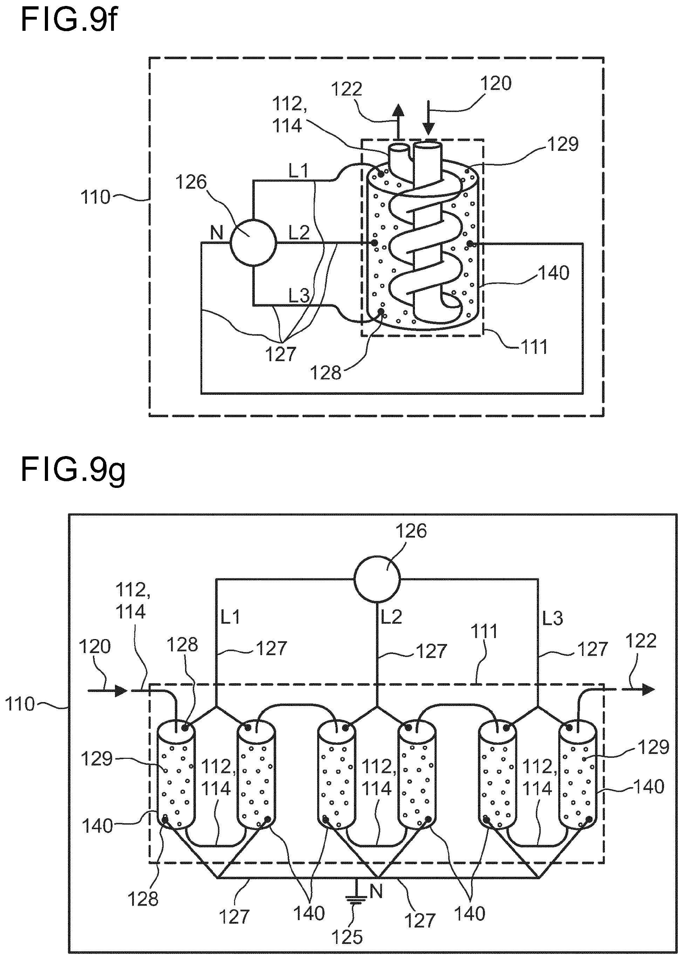

Figuren 9a bis 9g zeigen weitere schematische Darstellungen weiterer Ausführungsbeispiele der erfindungsgemäßen Einrichtung 110. Figur 9a bis f zeigen Ausführungsformen bei welchen das stromleitende Medium 129 mittels 3-phasigen Wechselstrom oder 3-phasiger Wechselspannung beheizt wird. Die drei Außenleiter werden mit L1, L2 und L3 und der Neutralleiter wird mit N bezeichnet. In Figur 9a ist ein Hohlzylinder für das stromleitende Medium 129 mit einem Innenzylinder für den Einsatzstoff vorgesehen. Figur 9b zeigt eine Ausführungsform mit mehreren Rohrleitungen 112, welche von einem Zylinder umgeben sind, welcher mit stromleitendem Medium 129 gefüllt ist. In Figur 9c sind mehrere Behälter 140 in Form von Zylindern mit stromleitendem Medium 129 vorgesehen, welche von einer Rohrleitung 112 mit Einsatzstoff umgeben sind. In Figur 9d ist eine Ausführungsform mit drei Schellen 141 mit stromleitendem Medium 129 gezeigt, welche um eine Rohrleitung 112 mit Einsatzstoff angeordnet sind. In Figur 9e ist eine spiralförmige Rohrleitung 112 mit Einsatzstoff gezeigt, welche von einem Zylinder mit stromleitendem Medium 129 umgeben ist. Es sind auch Ausführungsformen denkbar, in welchen ein spiralförmiges Rohr mit stromleitendem Medium 129 vorgesehen ist, welches von einer Rohrleitung 112 umgeben ist. Weiter sind Ausführungsformen mit einer Verkettung von Rohrleitungen im elektrotechnischen Sinne möglich, beispielsweise mehrfache spiralförmige Elemente im Zylinder. Figur 9f zeigt eine Ausführungsform mit einer Unsymmetrie der Rohrleitung 112. Unsymmetrie kann allgemein möglich sein, beispielsweise können Einlass 120 und Auslass 122 an der gleichen Seite der Rohrleitung sein. Figur 9g zeigt eine Ausführungsform, in welcher das stromleitende Medium 129 in Hohlzylindern um verschiedene Bereiche einer Rohrleitung 112 angeordnet sind und im elektrotechnischen Sinne angeordnet sind.

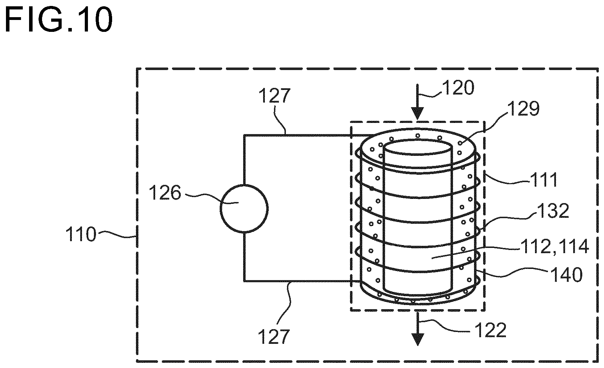

Figur 10 zeigt eine Ausführungsform mit einer induktiven Beheizung der der Rohrleitung 112. Die Einrichtung 110 kann mindestens eine Spule 132 aufweisen. Die Strom- oder Spannungsquelle 126 kann mit der Spule 132 verbunden sein und eingerichtet ist die Spule 132 mit einer Spannung oder einem Strom zu beaufschlagen. Das stromleitende Medium 129 und die Spule können 132 derart angeordnet sein, dass das elektromagnetische Feld der Spule 132 einen elektrischen Strom in dem stromleitenden Medium induziert, welcher das stromleitende Medium durch Joulesche Wärme, welche bei Durchgang des elektrischen Stromes durch das stromleitende Medium 129 entsteht, zum Erhitzen des Einsatzstoffes erwärmt. Die Spulengeometrie kann beliebig ausgestaltet sein. Beispielsweise kann die Spule 132 Vertikal, Horizontal, Zylinderförmig oder auch anders ausgestaltet sein. In dem Reaktivraum oder Aufwärmung 111 können mehrere induktive Beheizungen vorgesehen sein, welche beispielsweise parallel, seriell oder anders angeordnet sein können.

### Bezugszeichenliste

- 110: Einrichtung
- 111: Reaktivraum oder Aufwärmung
- 112: Rohrleitung
- 114: Rohrleitungssegment
- 118: Rohrsystem
- 120: Einlass
- 122: Auslass
- 124: Isolator
- 125: Erdung
- 126: Spannung-/ Stromquelle
- 127: elektrische Zu- und Ableitung
- 128: Elektroden
- 129: Stromleitendes Medium
- 130: Galvanisch isolierende Wand
- 131: Regler
- 132: Spule
- 133: Elektrodenbrücke
- 134: Baukasten
- 140: Behälter z.B. Zylinder
- 141: Schelle

## Patentansprüche

1. Einrichtung (110) umfassend mindestens eine Rohrleitung (112) zur Aufnahme mindestens eines Einsatzstoffes, wobei die Einrichtung (110) mindestens ein stromleitendes Medium (129) aufweist, wobei die Einrichtung (110) mindestens eine Strom- oder Spannungsquelle (126) aufweist, welche eingerichtet ist einen elektrischen Strom in dem stromleitenden Medium (129) zu erzeugen, welcher die Rohrleitung (112) durch Joulesche Wärme, welche bei Durchgang des elektrischen Stromes durch das stromleitenden Medium (129) entsteht, erwärmt, **dadurch gekennzeichnet, dass** das stromleitende Medium (129) einen spezifischen Widerstand ρ von 0,1 Ωmm²/m ≤ ρ ≤ 1000 Ωmm²/m aufweist.

2. Einrichtung (110) nach dem vorhergehenden Anspruch, **dadurch gekennzeichnet, dass** die Einrichtung (110) eingerichtet ist den Einsatzstoff auf eine Temperatur im Bereich von 200 °C bis 1700 °C, bevorzugt 300 °C bis 1400 °C, besonders bevorzugt 400 °C bis 875 °C, zu erhitzen.

3. Einrichtung (110) nach dem vorhergehenden Anspruch, **dadurch gekennzeichnet, dass** das stromleitende Medium (129) und die Rohrleitung (112) derart zueinander angeordnet sind, dass das stromleitende Medium (129) die Rohrleitung (112) zumindest teilweise umgibt und/oder dass die Rohrleitung (112) das stromleitende Medium (129) zumindest teilweise umgibt.

4. Einrichtung (110) nach einem der vorhergehenden Ansprüche, **dadurch gekennzeichnet, dass** das stromleitende Medium (129) einen festen, flüssigen und/oder gasförmigen Aggregatzustand aufweist ausgewählt aus der Gruppe bestehend aus fest, flüssig und gasförmig und Gemische.

5. Einrichtung (110) nach einem der vorhergehenden Ansprüche, **dadurch gekennzeichnet, dass** das stromleitende Medium (129) ein stromleitendes Granulat oder ein stromleitendes Fluid ist.

6. Einrichtung (110) nach einem der vorhergehenden Ansprüche, **dadurch gekennzeichnet, dass** das stromleitende Medium (129) mindestens ein Material aufweist, ausgewählt aus der Gruppe bestehend aus: Kohlenstoff, Karbide, Silizide, elektrisch leitfähige Öle, Salzschmelzen, anorganische Salze sowie festflüssige Gemische.

7. Einrichtung (110) nach einem der vorhergehenden Ansprüche, **dadurch gekennzeichnet, dass** das stromleitende Medium (129) einen spezifischen Widerstand ρ von 10 Ωmm²/m ≤ ρ ≤ 1000 Ωmm²/m.

8. Einrichtung (110) nach einem der vorhergehenden Ansprüche, **dadurch gekennzeichnet, dass** die Strom- und/oder Spannungsquelle (126) eine einphasige oder mehrphasige Wechselstrom- und/oder einphasige oder mehrphasige Wechselspannungsquelle oder eine Gleichstrom- und/oder Gleichspannungsquelle umfasst.

9. Einrichtung (110) nach einem der vorhergehenden Ansprüche, **dadurch gekennzeichnet, dass** die Einrichtung (110) eine Mehrzahl von Rohrleitungen (112) aufweist, wobei die Einrichtung (110) I Rohrleitungen (112) aufweist, wobei I eine natürliche Zahl größer oder gleich zwei ist, wobei die Rohrleitungen (112) symmetrische oder unsymmetrische Rohre und/oder eine Kombination davon aufweisen.

10. Einrichtung (110) nach dem vorhergehenden Anspruch, **dadurch gekennzeichnet, dass** die Rohrleitungen (112) unterschiedlich hinsichtlich Durchmesser, und/oder Länge, und/oder Geometrie ausgestaltet sind.

11. Einrichtung (110) nach einem der zwei vorhergehenden Ansprüche, **dadurch gekennzeichnet, dass** mehrere oder sämtliche der Rohrleitungen (112) seriell und/oder parallel konfiguriert sind.

12. Einrichtung (110) nach einem der vorhergehenden Ansprüche, **dadurch gekennzeichnet, dass** der Einsatzstoff ein thermisch zu spaltender Kohlenwasserstoff und/oder ein Gemisch ist.

13. Anlage umfassend mindestens eine Einrichtung (110) nach einem der vorhergehenden Ansprüche, **dadurch gekennzeichnet, dass** die Anlage ausgewählt ist aus der Gruppe bestehend aus: einer Anlage zur Durchführung von mindestens einer endothermen Reaktion, einer Anlage zur Aufwärmung, einer Anlage zur Vorwärmung, einem Steamcracker, einem Steamreformer, einer Vorrichtung zur Alkandehydrierung, einem Reformer, einer Vorrichtung zum Trockenreforming, einer Vorrichtung zur Styrolherstellung, einer Vorrichtung zur Ethylbenzoldehydrierung, einer Vorrichtung zum Spalten von Harnstoffen, Isocyanate, Melamin, einem Cracker, einem katalytischen Cracker, einer Vorrichtung zum Dehydrieren.

14. Verfahren zum Erhitzen mindestens eines Einsatzstoffes unter Verwendung einer Einrichtung (110) gemäß einem der vorhergehenden, eine Einrichtung betreffenden Ansprüche, wobei das Verfahren die folgenden Schritte umfasst:
- Bereitstellen mindestens einer Rohrleitung (112) zur Aufnahme des Einsatzstoffes und Aufnahme des Einsatzstoffes in die Rohrleitung (112);
- Bereitstellen mindestens einer Strom- und/oder mindestens einer Spannungsquelle (126);
- Erzeugen eines elektrischen Stroms in einem stromleitenden Medium (129) der Einrichtung (110), welcher die Rohrleitung (112) durch Joulesche Wärme, welche bei Durchgang des elektrischen Stromes durch das stromleitende Medium (112) entsteht, zum Erhitzen des Einsatzstoffes erwärmt, wobei das stromleitende Medium (129) einen spezifischen Widerstand ρ von 0,1 Ωmm²/m ≤ ρ ≤ 1000 Ωmm²/m aufweist.

## Claims

1. A device (110) comprising at least one pipeline (112) for receiving at least one feedstock, said device (110) having at least one current-conducting medium (129), said device (110) having at least one power source or voltage source (126) set up to generate an electrical current in the current-conducting medium (129) which heats the pipeline (112) by Joule heating that arises on passage of the electrical current through the current-conducting medium (129), wherein said current-conducting medium (129) has a specific resistivity ρ of 0.1 Ωmm²/m ≤ ρ ≤ 1000 Ωmm²/m.

2. The device (110) according to the preceding claim, wherein the device (110) is set up to heat the feedstock to a temperature in the range from 200°C to 1700°C, preferably 300°C to 1400°C, more preferably 400°C to 875°C.

3. The device (110) according to the preceding claim, wherein the current-conducting medium (129) and the pipeline (112) are arranged relative to one another such that the current-conducting medium (129) at least partly surrounds the pipeline (112) and/or that the pipeline (112) at least partly surrounds the current-conducting medium (129).

4. The device (110) according to any of the preceding claims, wherein the current-conducting medium (129) is in a solid, liquid and/or gaseous state of matter selected from the group consisting of solid, liquid, gaseous and mixtures.

5. The device (110) according to any of the preceding claims, wherein the current-conducting medium (129) is a current-conducting granular material or a current-conducting fluid.

6. The device (110) according to any of the preceding claims, wherein the current-conducting medium (129) includes at least one material selected from the group consisting of: carbon, carbides, silicides, electrically conductive oils, salt melts, inorganic salts and solid/liquid mixtures.

7. The device (110) according to any of the preceding claims, wherein the current-conducting medium (129) a specific resistivity ρ of 10 Ωmm²/m ≤ ρ ≤ 1000 Ωmm²/m.

8. The device (110) according to any of the preceding claims, wherein the power source and/or voltage source (126) comprises a single-phase or multiphase AC power source and/or a single-phase or multiphase AC voltage source, or a DC power source and/or DC voltage source.

9. The device (110) according to any of the preceding claims, wherein the device (110) has a plurality of pipelines (112), said device (110) having 1 pipelines (112) where 1 is a natural number not less than two, and said pipelines (112) having symmetric or asymmetric pipes and/or a combination thereof.

10. The device (110) according to the preceding claim, wherein the pipelines (112) are of different configuration with regard to diameter, and/or length, and/or geometry.

11. The device (110) according to either of the two preceding claims, wherein two or more or all of the pipelines (112) are in series and/or parallel configuration.

12. The device (110) according to any of the preceding claims, wherein the feedstock is a hydrocarbon to be subjected to thermal cleavage and/or a mixture.

13. A plant comprising at least one device (110) according to any of the preceding claims, wherein the plant is selected from the group consisting of: a plant for performance of at least one endothermic reaction, a plant for heating, a plant for preheating, a steamcracker, a steam reformer, an apparatus for alkane dehydrogenation, a reformer, an apparatus for dry reforming, an apparatus for styrene production, an apparatus for ethylbenzene dehydrogenation, an apparatus for cracking of ureas, isocyanates, melamine, a cracker, a catalytic cracker, an apparatus for dehydrogenation.

14. A method of heating at least one feedstock using a device (110) according to any of the preceding claims relating to a device, said method comprising the following steps:
- providing at least one pipeline (112) for receiving the feedstock and receiving the feedstock in the pipeline (112);
- providing at least one power source and/or at least one voltage source (126);
- generating an electrical current in a current-conducting medium (129) in the device (110), which heats the pipeline (112) by Joule heating that arises on passage of the electrical current through the current-conducting medium (112), in order to heat the feedstock, said current-conducting medium (129) having a specific resistivity ρ of 0.1 Ωmm²/m ≤ ρ ≤ 1000 Ωmm²/m.

## Revendications

1. Dispositif (110), comprenant au moins une conduite (112) pour recevoir au moins une charge d'alimentation, le dispositif (110) présentant au moins un milieu conducteur de courant (129), dans lequel le dispositif (110) présente au moins une source de courant ou de tension (126) qui est conçue pour produire un courant électrique dans le milieu conducteur de courant (129), qui chauffe la conduite (112) par un effet Joule qui se produit lors du passage du courant électrique à travers le milieu conducteur de courant (129), **caractérisé en ce que** le milieu conducteur de courant (129) présente une résistance spécifique ρ de 0,1 Ωmm²/m ≤ ρ ≤ 1000 Ωmm²/m.

2. Dispositif (110) selon la revendication précédente, **caractérisé en ce que** le dispositif (110) est conçu pour chauffer la charge d'alimentation à une température dans la plage de 200 °C à 1700 °C, de préférence de 300 °C à 1400 °C, de manière particulièrement préférée de 400 °C à 875 °C.

3. Dispositif (110) selon la revendication précédente, **caractérisé en ce que** le milieu conducteur de courant (129) et la conduite (112) sont disposés l'un par rapport à l'autre de telle sorte que le milieu conducteur de courant (129) entoure la conduite (112) au moins partiellement et/ou **en ce que** la conduite (112) entoure le milieu conducteur de courant (129) au moins partiellement.

4. Dispositif (110) selon l'une quelconque des revendications précédentes, **caractérisé en ce que** le milieu conducteur de courant (129) présente un état physique solide, liquide et/ou gazeux, sélectionné dans le groupe composé de solide, liquide et gazeux et de mélanges.

5. Dispositif (110) selon l'une quelconque des revendications précédentes, **caractérisé en ce que** le milieu conducteur de courant (129) est un granulat conducteur de courant ou un fluide conducteur de courant.

6. Dispositif (110) selon l'une quelconque des revendications précédentes, **caractérisé en ce que** le milieu conducteur de courant (129) présente au moins un matériau sélectionné dans le groupe composé : de carbone, de carbures, de silicides, d'huiles conductrices électriques, de sels fondus, de sels anorganiques ainsi que de mélanges solides-liquides.

7. Dispositif (110) selon l'une quelconque des revendications précédentes, **caractérisé en ce que** le milieu conducteur de courant (129) une résistance spécifique ρ de 10 Ωmm²/m ≤ ρ ≤ 1000 Ωmm²/m.

8. Dispositif (110) selon l'une quelconque des revendications précédentes, **caractérisé en ce que** la source de courant et/ou de tension (126) comprend une source de courant alternatif monophasé ou polyphasé et/ou une source de tension alternative monophasée ou polyphasée ou une source de courant continu et/ou de tension continue.

9. Dispositif (110) selon l'une quelconque des revendications précédentes, **caractérisé en ce que** le dispositif (110) présente une pluralité de conduites (112), dans lequel le dispositif (110) présente I conduites (112), I étant un nombre naturel supérieur ou égal à deux, les conduites (112) présentant des tuyaux symétriques ou asymétriques et/ou une combinaison de ceux-ci.

10. Dispositif (110) selon la revendication précédente, **caractérisé en ce que** les conduites (112) sont configurées différemment quant au diamètre et/ou à la longueur et/ou à la géométrie.

11. Dispositif (110) selon l'une quelconque des deux revendications précédentes, **caractérisé en ce que** plusieurs ou toutes les conduites (112) sont configurées en série et/ou en parallèle.

12. Dispositif (110) selon l'une quelconque des revendications précédentes, **caractérisé en ce que** la charge d'alimentation est un hydrocarbure fissile par neutrons thermiques et/ou un mélange.

13. Installation, comprenant au moins un dispositif (110) selon l'une quelconque des revendications précédentes, **caractérisée en ce que** l'installation est sélectionnée dans le groupe composé : d'une installation pour exécuter au moins une réaction endotherme, d'une installation de chauffage, d'une installation de préchauffage, d'un vapocraqueur, d'un vaporeformeur, d'un dispositif de déshydrogénation d'alcane, d'un reformeur, d'un dispositif de reformage à sec, d'un dispositif de fabrication de styrène, d'un dispositif pour la déshydrogénation de l'éthylbenzène, d'un dispositif pour craquer des urées, de l'isocyanate, de la mélamine, d'un craqueur, d'un craqueur catalytique, d'un dispositif de déshydrogénation.

14. Procédé permettant de chauffer au moins une charge d'alimentation en utilisant un dispositif (110) selon l'une quelconques des revendications précédentes concernant un dispositif, le procédé comprenant les étapes suivantes consistant à :
- fournir au moins une conduite (112) pour recevoir une charge d'alimentation, et recevoir la charge d'alimentation dans la conduite (112) ;
- fournir au moins une source de courant et/ou au moins une source de tension (126) ;
- produire un courant électrique dans un milieu conducteur de courant (129) du dispositif (110) qui chauffe la conduite (112) par un effet Joule qui se produit lors du passage du courant électrique à travers le milieu conducteur de courant (112) pour chauffer la charge d'alimentation, dans lequel le milieu conducteur de courant (129) présente une résistance spécifique ρ de 0,1 Ωmm²/m ≤ ρ ≤ 1000 Ωmm²/m.
